# EUROPEAN PATENT SPECIFICATION

(11) **EP 4 590 495 B1**
(45) Date of publication and mention of the grant of the patent: **19.08.2026**
(21) Application number: 23783005.4
(22) Date of filing: 19.09.2023
(51) Int. Cl.: B29C 70/38

(54) **SHEARING MECHANISM FOR USE IN A TAPE LAYING HEAD AND COMPACTION SHOE**
SCHERMECHANISMUS ZUR VERWENDING IN EINEM BANDLEGEKOPF UND EIN VERDICHTUNGSSCHUH
MÉCANISME DE CISAILLEMENT POUR UTILISATION DANS UNE TÊTE DE POSE DE BANDE ET UN PATIN DE COMPACTAGE

(30) Priority: 20.09.2022 GR 20220100762; 10.11.2022 GB 202216789
(43) Date of publication of application: 30.07.2025
(73) Proprietor: Icomat Limited, Hardwicke Gloucestershire GL2 2BY (GB)
(72) Inventor: ZYMPELOUDIS, Evangelos, Bristol, Bristol BS3 2UN (GB); HOPCRAFT, Chris, Bristol, Bristol BS3 2UN (GB); KIM, Byung chul, Bristol, Bristol BS3 2UN (GB); CHAPPELL, Benjamin, Bristol, Bristol BS3 2UN (GB)
(74) Representative: Forresters IP LLP
(86) International application number: PCT/GB2023/052422
(87) International publication number: WO 2024/062230

(56) References cited:
- WO-A1-2022/058703
- DE-A1- 4 002 087

## Description

### FIELD

Embodiments of the present invention relate to: a tape laying head configured to lay a tow material on a mould in the construction of a composite structure.

### BACKGROUND

Composite materials, having a matrix material (e.g. a thermosetting resin) forming a matrix holding elongate reinforcement elements (e.g. carbon fibres), are commonly used to provide strong and lightweight structures. Such materials are now used in a wide range of different applications - from sports equipment to the aerospace industry.

Composite structures may be formed using tapes or tows of substantially parallel carbon fibres (the terms "tape" and "tow" are used synonymously herein, although a tape may include a plurality of tows). The tow may be pre-impregnated with the matrix material or the matrix material may be added at a later time in the manufacturing process. The tows are laid on a mould structure in layers. The laid-up mould structure is then heated, e.g. in an autoclave, under pressure to polymerise the matrix material and form the composite structure (which is later removed from the mould).

The laying of the tow on the mould structure may require the tow to be traversed through one or more bends or curves. This can impact the parallel arrangement of the carbon fibres in the tow - as the path lengths for the fibres differ depending on their position with respect to the width of the tow (e.g. in the inside or outside of the bend or curve). The effects can include, for example, structural defects, such as buckling of the carbon fibres or movement to a non-parallel arrangement, or misalignment with the intended tow laying path. These issues can impact the properties of the resulting composite structure detrimentally.

GB2492594 discloses a tow placement head member to lay a tow tape comprising reinforcement fibres and a matrix or binder material, the tow placement head member being for use in the formation of a variable angle tow composite structure and comprising: a pinch arrangement configured to receive a tow tape and to allow the tow tape to pass therethrough, the pinch arrangement comprising a tow feed roller and a tow feed shoe configured to guide the tow tape towards a compaction shoe; and a compaction shoe configured to receive tow tape from the pinch arrangement and to press the tow tape against a surface on which the tow tape is to be laid, wherein the pinch arrangement is configured to apply shear deformation to a portion of the tow tape between the compaction shoe and the pinch arrangement.

However, the mould structure may not have an ideal flat or uniform surface. In practice, this can lead to separation between the compaction shoe, or parts of the compaction shoe, and the mould structure. Again, this may result in defects including buckling of the carbon fibres or movement to a non-parallel arrangement, misalignment with the intended tow laying path, or improperly adhered layers of tow material (which may result in bubbles within the composite material structure).

Therefore, there is a desire to provide a tow placement head member which can reduce the risk of these issues.

WO2022/058703 discloses the use of a flexible or soft compaction shoe to allow some conformability with respect to the mould structure surface. However, there is a need to improve the conformability and provide more consistent and/or accurate contact between the compaction roller and the surface of the mould structure.

Moreover, conventional automated fibre placement equipment (which does not include a pinch arrangement as in GB2492594, for example) will typically struggles to lay tow tape on moulds with significant curvature. Typically, as the compaction shoe or roller in such equipment must remain perpendicular to the direction of travel of the tow placement head member with respect to the mould, the compaction shoe or roller must lift at least partially from the mould surface when traversing significant curves in the mould. This lack of compaction creates defects in the laid tow tape.

For example, although US9522506 discloses a tape laminating machine having a compaction roller which lays up composite tape over a substrate having a convex radius, the compaction roller folds the tape as it moves over the convex radius, while simultaneously pivoting about a trailing edge of the tape to prevent the compaction roller from lifting off the tape laid just before the convex radius. Therefore, this machine introduces considerable defects.

As such, there is a need to provide a tow placement head member which can maintain compression of the tow tape against the mould even when there is significant curvature of the mould (i.e. one o more high angle transition zones).

### BRIEF DESCRIPTION OF THE INVENTION

An aspect provides a shearing mechanism for use in a tape laying head configured to lay a tow material on a mould in the construction of a composite structure, the shearing mechanism being configured to receive tow material from a tow supply and to steer the tow material by applying shear deformation to the tow material between a pair of shear boundaries defined by the shearing mechanism, the shearing mechanism including a compaction shoe configured to press the tow material onto a mould, wherein the compaction shoe includes: a compaction member at least partially defining one of the pair of shear boundaries, a mounting member configured to couple the compaction member to the to another part of the shearing mechanism or the tape laying head, and wherein the compaction shoe further includes: a compressible member located between the compaction member and the mounting member such that compression and decompression of the compressible member permits movement of at least part of the compaction member towards and away from the mounting member, and/or an actuator configured to couple the mounting member to the other part of the shearing mechanism or the tape laying head such that operation of the actuator permits movement of at least part of the compaction member towards and away from the mounting member.

Both the compressible member and actuator may be provided as part of the compaction shoe. The compaction member may be a flexible elongate member.

The compaction member may include a plate configured to contact the mould.

The compaction member may include one or more protrusions configured to inhibit movement of the compressible member across a surface of the compaction member.

The compressible member may include a plurality of compressible segments or parts.

The compressible member may be formed from one or more of a foamed polymer and a bladder filled with a gas or liquid.

The mounting member may be a flexible member.

The mounting member may be an elongate member.

A shearing mechanism may further include a plurality of actuators configured to couple the mounting member to the other part of the tape laying head, wherein the actuators may be distributed along a length of the elongate mounting member.

Each actuator may be coupled to the mounting member by a knuckle joint.

The mounting member may be a rigid member.

The mounting member may include a hollow body which is configured to receive, at least in part, the compressible member.

The compressible member may include a plurality of compressible parts or segments, wherein each part or segment may be coupled to a block, to secure the compressible part or segment to the mounting member.

The compaction member may be in the form of a compaction roller configured to rotate with respect to the mounting member.

The compressible member may be provided as a layer of the compaction roller.

The shearing mechanism may further include a gripping member the form of a roller configured to define, with the compaction member, one of the pair of shear boundaries.

The gripping member may be mounted towards one end of an L-shaped gripping member arm and an actuator is mounted towards another end of the L-shaped gripping member arm, such that the actuator may be configured to drive pivotable movement of the L-shaped gripping member arm about a corner of the L-shapes gripping member arm to control the force applied to the compaction member by the gripping member.

Another aspect provides a compaction shoe or roller including: a compaction member at least partially defining a shear boundary of tow material, a mounting member configured to couple the compaction member to a part of a shearing mechanism or a tape laying head, and a compressible member located between the compaction member and the mounting member such that compression and decompression of the compressible member permits movement of the compaction member towards and away from the mounting member.

Another aspect provides a tape laying head configured to lay a tow material on a mould in the construction of a composite structure, the tape laying head including a shearing mechanism as above.

Another aspect provides a system including a plurality of tape laying heads configured to lay a tow material on a mould in the construction of a composite structure, wherein: each tape laying head includes a shearing mechanism being configured to receive tow material from a tow supply and to steer the tow material by applying shear deformation to the tow material between a pair of shear boundaries defined by the shearing mechanism, the tape laying heads are arranged in a leading row and a trailing row with the tape laying head or heads of the leading row being interleaved with the tape laying head or heads of the trailing row, and the leading and trailing rows can be moved with respect to each other to alter the interleaving of the tape laying heads of the rows.

There may be a plurality of tape laying heads in the leading row.

The tape laying heads in the leading row may be parallel with each other and aligned to form the leading row.

There may be a plurality of tape laying heads in the trailing row.

The tape laying heads in the trailing row may be parallel with each other and aligned to form the trailing row.

The shearing mechanism may be a shearing mechanism as above.

Another aspect provides a method of operating a tape laying head having a shearing mechanism, the tape laying head being configured to lay a tow material on a mould in the construction of a composite structure, the shearing mechanism being configured to receive tow material from a tow supply and to steer the tow material by applying shear deformation to the tow material between a pair of shear boundaries defined by the shearing mechanism, the shearing mechanism including a compaction shoe configured to press the tow material onto a mould, wherein the method includes: providing tow material from the tow supply such that a width of the tow material extends across a length of the compaction shoe; pressing the tow material onto the mould using the compaction shoe; and moving the tape laying head relative to the mould such that the length of the compaction shoe remains substantially parallel to a line defined by a centre of radius of a curve of the mould as the tape laying head traverses the curve of the mould.

The compaction shoe may includes a compressible member located between a compaction member and a mounting member of the compaction shoe, such that compression and decompression of the compressible member permits movement of at least part of the compaction member towards and away from the mounting member, and/or wherein the compaction shoe may include an actuator configured to couple a mounting member of the compaction shoe to another other part of the shearing mechanism or the tape laying head such that operation of the actuator permits movement of at least part of the compaction member towards and away from the mounting member, and the method may further include: permitting the compaction member to move relative to the mounting member as the tape laying head traverses the curve of the mould.

Another aspect provides a system including: a tape laying head having a shearing mechanism, the tape laying head being configured to lay a tow material on a mould in the construction of a composite structure, the shearing mechanism being configured to receive tow material from a tow supply and to steer the tow material by applying shear deformation to the tow material between a pair of shear boundaries defined by the shearing mechanism, the shearing mechanism including a compaction shoe configured to press the tow material onto a mould, wherein the system is configured to: provide tow material from the tow supply such that a width of the tow material extends across a length of the compaction shoe; press the tow material onto the mould using the compaction shoe; and move the tape laying head relative to the mould such that the length of the compaction shoe remains substantially parallel to a line defined by a centre of radius of a curve of the mould as the tape laying head traverses the curve of the mould.

The compaction shoe may include a compressible member located between a compaction member and a mounting member of the compaction shoe, such that compression and decompression of the compressible member permits movement of at least part of the compaction member towards and away from the mounting member, and/or wherein the compaction shoe may include an actuator configured to couple a mounting member of the compaction shoe to another other part of the shearing mechanism or the tape laying head such that operation of the actuator permits movement of at least part of the compaction member towards and away from the mounting member.

Another aspect provides a method of operating a tape laying head having a shearing mechanism, the tape laying head being configured to lay a tow material on a mould in the construction of a composite structure, the shearing mechanism being configured to receive tow material from a tow supply and to steer the tow material by applying shear deformation to the tow material between a pair of shear boundaries defined by the shearing mechanism, the shearing mechanism including a compaction shoe configured to press the tow material onto a mould, wherein the method includes: providing tow material from the tow supply such that a width of the tow material extends across a length of the compaction shoe; pressing the tow material onto the mould using the compaction shoe; and rotating the compaction shoe relative to the tow material in a slewing movement as the tow material is pressed onto the mould, such that the compaction shoe rotationally slides over laid tow material and a laid width of the tape decreases with the slewing movement.

Another aspect provides a system including: a tape laying head having a shearing mechanism, the tape laying head being configured to lay a tow material on a mould in the construction of a composite structure, the shearing mechanism being configured to receive tow material from a tow supply and to steer the tow material by applying shear deformation to the tow material between a pair of shear boundaries defined by the shearing mechanism, the shearing mechanism including a compaction shoe configured to press the tow material onto a mould, wherein the system is configured to: provide tow material from the tow supply such that a width of the tow material extends across a length of the compaction shoe; press the tow material onto the mould using the compaction shoe; and rotate the compaction shoe relative to the tow material in a slewing movement as the tow material is pressed onto the mould, such that the compaction shoe rotationally slides over laid tow material and a laid width of the tape decreases with the slewing movement.

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a view of a tape laying head which may be used in some versions;
FIGURE 2 is a schematic view of a system which may be used in some versions;
FIGURE 3 is a schematic view of tow material and shearing boundaries as implemented in some versions;
FIGURE 4 is an exploded view of a compaction shoe configuration and actuators according to some versions;
FIGURE 5 is a schematic view of a compaction shoe configuration and actuators in use according to some versions;
FIGURE 6 is an exploded view of a compaction shoe configuration according to some versions;
FIGURE 7 is a cross-section view of a compaction shoe configuration according to some versions in use, with a compressible member fully compressed;
FIGURE 8 shows a cross-section view of a compaction shoe configuration according to some versions in use, with a compressible member not fully compressed;
FIGURE 9 shows a schematic view of a system of some versions;
FIGURE 10 shows a another schematic view of a system of some versions;
FIGURE 11 shows a part of a tape laying head of some versions;
FIGURE 12 shows an exploded view of a compaction shoe configuration according to some versions;
FIGURES 13a and 13b show schematic examples of tow material laid on a mould traversing a high angle transition zone; and
FIGURES 14a and 14b show views of two different beams which may be formed according to some versions;
Figures 15a, 15b, and 15c show three views of the same mould one which two lines of tow material have been laid, with figure 15a being a top-down view of the upper part of the mould shown in figure 15c and figure 15b is a view of the front portion of the mould shown in figure 15c; and
Figure 16 shows schematically the movement of a compaction shoe along a mould and performing a slewing movement.

### DETAILED DESCRIPTION OF THE DISCLOSURE

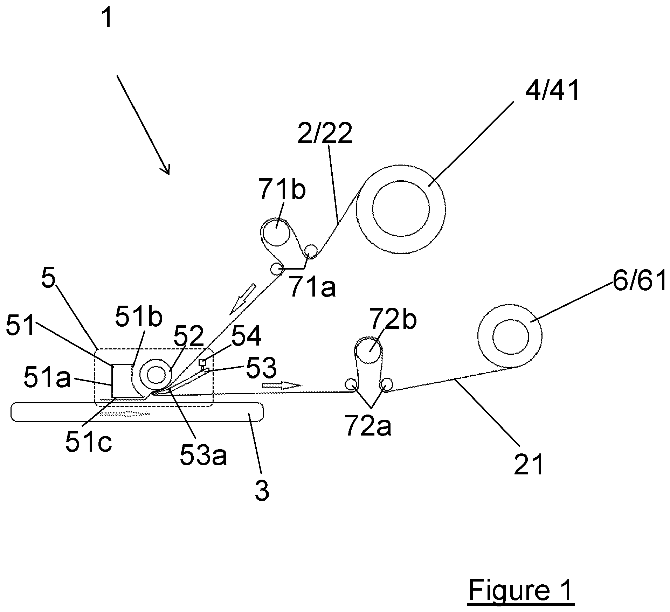

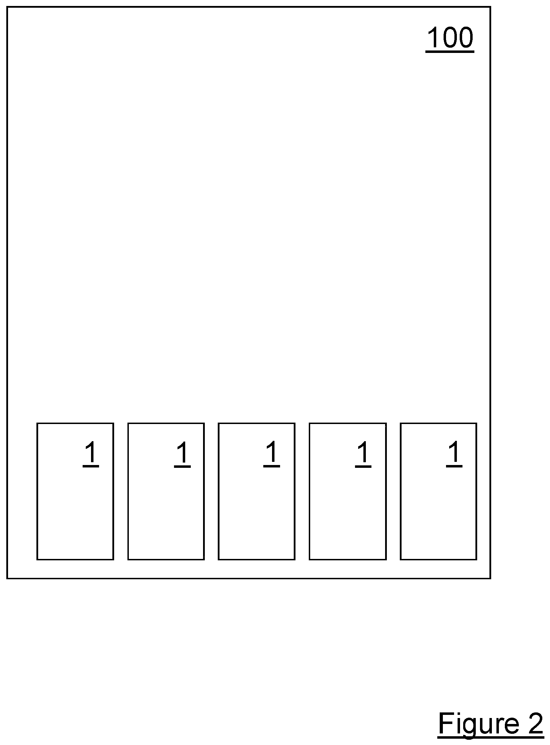

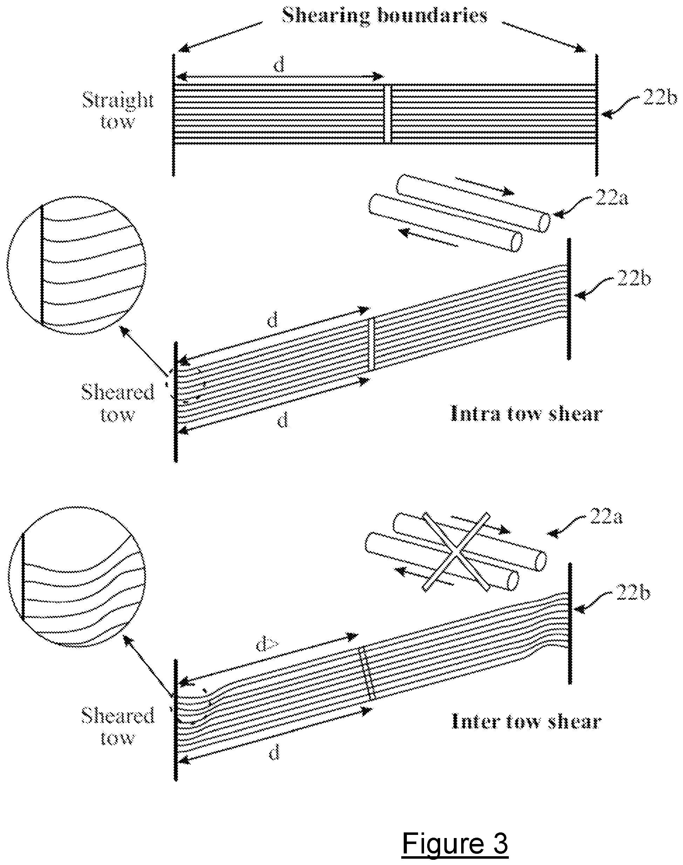

Versions of the present technology build on the disclosure in WO2022/058703. Therefore, by way of aiding in the understanding of versions of the present technology, components of the tape laying head 1 and system 100 described herein are presented with reference to figures 2 and 3 from WO2022/058703 (which form the basis of figures 1 and 2 herein).

Figure 3 depicts the desired result of use of the technology - intra tow shearing with the minimum inter tow shearing, using two shearing boundaries defined by the shearing mechanism 5.

### General system overview

Versions of the present technology may include a tape laying head 1 - see figures 1 and 2, for example. The tape laying head 1 is configured to lay a tape 2 on a mould 3. The tape laying head 1 may be a part of a tape laying system 100 and some versions of the technology may include the tape laying system 100 - which may, for example, include a plurality of the tape laying heads 1 as described herein.

The tape laying head 1 may be configured to lay the tape 2 on the mould 3 as part of the construction of a composite structure, for example.

The tape laying system 100 is configured to move the or each tape laying head 1 across the mould 3 - e.g. using a robotic arm or gantry. The or each tape laying head 1 is configured to lay the tape 2 onto the mould 3 as the mould 3 is traversed by the or each tape laying head 1. In some versions, the tape laying system 100 is configured to move the or each tape laying head 1 across a substantially stationary mould 3 but, equally, the tape laying system 100 may be configured to move the mould 3 relative to the one or more tape laying heads 1 which are substantially stationary (or to move both the mould 3 and the or each tape laying head 1). In any event, the tape laying system 100 may be configured to move the or each tape laying head 1 relative to the mould 3, in whatever manner this may be achieved.

The tape laying head 1 is configured to receive tape 2 from a tape supply 4 for laying on the mould 3. The tape supply 4 may form part of the tape laying head 1 or may be part of the wider tape laying system 100, for example.

The tape 2 from the tape supply 4 is configured to be delivered, by the tape laying head 1, to the shearing mechanism 5. The shearing mechanism 5 is configured to receive the tape 2 from the tape supply 4 and to lay the tape 2 onto the mould 3.

In some embodiments, the tape 2 provided by the tape supply may have a backing material 21 and a tow material 22, with the backing material 21 supporting the tow material 22 (e.g. as the tape 2 is delivered from the tape supply 4 to or towards the shearing mechanism 5). The tow material 22 is to be laid on the mould 3 and the backing material 21 may be for discarding, for example. The tow material 22 may include one or more reinforcement fibres and is described in more detail herein. In some embodiments, the backing material 21 provides a binding or resin material which may combined with the one or more reinforcement fibres to from the tow material 22. The binding or resin material may be provided as a layer on the backing material 21, for example.

At or in the region of the shearing mechanism 5, the backing material 21 may be removed from the tow material 22. This may occur before or as the tow material is laid onto the mould 3. A heater (not shown) may be provided to heat the tow material 22 and, in particular, the binder or resin material. The heater may be provided in the path of the tow material 22, upstream of the shearing mechanism 5, for example.

The tow laying head 1 may be configured to deliver the backing material 21, once separated from the tow material 22, to a backing material collector 6. The backing material collector 6 may be configured to collect the backing material 21 for later disposal (which may include recycling, for example). The backing material collector 6 may form part of the tape laying head 1 or may be part of the wider tape laying system 100, for example.

In operation, therefore, tape 2 may pass from the tape supply 4 to the shearing mechanism 5 - see the solid line arrows in figure 1 for the direction of travel of the tape 2 and/or backing material 21. At or in the region of the shearing mechanism 5, the backing material 21 of the tape 2 may be separated from the tow material 22. The shearing mechanism 5 may apply the tow material 22 to the mould 3 (the broken line arrow in figure 1 shows the direction of travel of the shearing mechanism 5 with respect to the mould 3) and the backing material 21 may be delivered to the backing material collector 6, for collection. All or some of these operations may be performed as part of the operation of the tape laying head 1 but, as described, some parts (such as the tape supply 4 and/or backing material collector 6) may be part of the wider tape laying system 100 - so the delivery and/or collection operations may be operations performed by the wider tape laying system 100, as the case may be.

Versions may include a tension control system such as described in WO2022/058703. Versions may include one or more additional rollers 71a,71b,72a,72b which may form part of the tension control system, for example. The tension control system may be configured to control a tension of the tow material 22 in a stage immediately prior to its laying on the mould 3. In other words, the tension control system may be configured to control the tension of the tow material 22 in the shearing mechanism 5.

### Tape

The tape 2 as described includes a backing material 21 and tow material 22. The backing material 21 may be a paper-based backing material 21, for example. The backing material 21 may be configured to support the tow material 22 prior to laying of the tow material 22 on the mould 3, for example. The backing material 21 may also be configured to aid the storage of the tape 2 such that the tape 2 may be wound around the bobbin 41 (e.g. of the tape supply 4).

The tow material 22 could take a number of different forms but includes one or more reinforcement fibres 22a (see figure 3, for example) which may be carbon fibres or glass fibres or hemp fibres or flax fibres, and may be fibres formed from recycled materials (such as glass or carbon fibres), for example. The reinforcement fibres 22a may be elongate fibres and may be in a woven or unwoven configuration in the tow material 22. The reinforcement fibres 22a, if a plurality are provided, may be provided in one or more bundles known as tows 22b.

The tow material 22 may include a binder material. The binder material may be configured to help to retain the relative arrangement of the reinforcement fibres 22a with respect to each other and/or to help to adhere the tow material 22 to the mould 3 (or other layers of tow material 22 already laid on the mould 3), for example. The binder material may be inadequate as a resin material for use in formation of a composite structure from the tow material 22. Therefore, the tow material 22 may be configured for and/or intended to be impregnated with a thermosetting or thermoplastic resin material - e.g. after laying of the tow material 22 on the mould 3. Such tow material 22 may be described as dry tow material 22 due to the absence of adequate resin material in its supplied form.

The tow material 22 may include one or more other layers of material which may include one or more layers of polymer material, for example. These one or more other layers of material may include one or more layers located on either side of the one or more reinforcement fibres 22a (i.e. beneath or above the or each reinforcement fibre 22a relative to the mould 3 when the tow material 22 has been laid on the mould 3).

The tow material 22 may be a pre-impregnated tow material 22. The pre-impregnated tow material 22 includes - in its supplied form - adequate resin material (i.e. thermosetting resin material) to form the composite structure from the tow material 22. Therefore, there is no need to apply further thermosetting or thermoplastic resin material, for example. The pre-impregnated tow material 22, therefore, includes the one or more reinforcement fibres 22a and a resin material. The resin material may also be called a matrix material and could take other forms.

Pre-impregnated tow material 22 tends to have higher shear stiffness than dry tow material 22.

In some versions, the tow material 22 is provided in two parts: the one or more reinforcement fibres and the binder or resin material. The two parts may be combined in the tape laying head 1 or in the wider tape laying system 100, for example. The binder or resin material may be provided on the backing material 21 for example.

In some versions, an endless backing material 21 may be provided (as part of the tape laying head 1), which serves the same purpose as the backing material 21 described herein with respect to supporting the tow material 22 (but not in relation to the storage of the tow material 22 or the provision of binding or resin material). The tow material 22 may be provided, therefore, from the tape supply 4 to the endless backing material 21 within the tape laying head 1, in such versions. In these versions, references to the tape 2 in relation to the tape supply 4 are references to the tow material 22 (e.g. such that the tow material 22 may be provided on a bobbin 41).

Versions of the technology are described in relation to tape 2 which includes the backing material 21 in its supplied form but it should be understood that the same applies to versions in which the backing material 21 is in the form of an endless backing material 21 provided in the tape laying head 1 or embodiments in which the tow material 22 is added to the resin material in the tape laying head 1 or in the wider tape laying system 100.

Generally, as used herein references to a tape 2 may be interpreted as references to one or more tows (each of which may comprise one or more reinforcement fibres 22a). Therefore, references to a tape 2 may be references to a tow and the terms are not used herein to any distinctive effect unless otherwise stated.

### Tape Supply

The tape supply 4 may include the bobbin 41 about which the tape 2 may be wound. The tape supply 4 may include a creel which may be configured to receive and support the bobbin 41. In some versions there is a plurality of bobbins 41 and each of the bobbins 41 is received and supported by the creel.

As described, the tape supply 4 may form part of the tape laying head 1 or part of the wider tape laying system 100.

The tape supply 4 may be configured to supply tape 2 to the shearing mechanism 5 and, as such, a tape path may be defined between the tape supply and the shearing mechanism 5. This tape path may be formed, at least in part, by the tape laying head 1. One or more parts of this tape path may be defined by a tube through which the tape 2 may pass, for example.

In some versions, the tape supply 4 is configured to supply tape 2 to a plurality of tape laying heads 1 of the tape laying system 100 (e.g. in versions in which there are multiple tape laying heads 1 as part of the tape laying system 100). The tape supply 4 may, therefore, include at least one bobbin 41 for each tape laying head 1 - such that separate tapes (or tows) 2 may be supplied to each tape laying head 1. In some versions, more than one tape (or tow) 2 is supplied, in parallel or otherwise generally contemporaneously, to a single (i.e. one and only one) tape laying head 1 (and there may be multiple such tape laying heads 1 which each receive multiple tapes 2 from the tape supply 4 in parallel or otherwise generally contemporaneously).

The or each bobbin 41 may be removable such that the tape supply 4 may include a creel configured to receive one or more bobbins 41. The tape supply 4 may at least partially define one or more tape paths through which tape 2 is configured to pass towards the shearing mechanism 5 (or mechanisms 5, as the case may be).

The tape 2 supplied by the tape supply 4 may be any tape 2 as described herein. Therefore, in some versions, this tape 2 may include a tow material 22 and a backing material 21. In some versions, the tape 2 supplied by the tape supply 4 includes the tow material 22 but the backing material 21 is provided separately - e.g. as an endless loop. The tow supply 4 may be configured to pass the tow material 22 in some such embodiments to the backing material 21 - e.g. the endless loop. In some versions, that endless loop may be considered to be part of the tape supply 4. In some versions, the endless loop may be part of the tape laying head 1, for example.

### Shearing mechanism

The shearing mechanism 5 may be a mechanism generally as described in GB2492594 and/or WO2022/058703, at least in terms of operating principle and/or in terms of several components.

The shearing mechanism 5 may include a compaction shoe 51 which is configured to press the tow material 22 onto the mould 3 (herein it will be appreciated that references to the laying of material, such as the tow material 22, on the mould 3 include the indirect laying of the material on the mould 3 (for example, the laying of material on a layer of material already laid on the mould 3).

The compaction shoe 51 may have a first side 51a which opposes a second side 51b across a width of the compaction shoe 51. The first side 51a may have a generally flat or planar surface, as depicted, or could have a surface of a different form. At a base of the first side 51a (which may also be at a base of the compaction shoe 51) there may be a trailing edge of the compaction shoe 51. The trailing edge delineates the first side 51a of the compaction shoe 51 and a compaction side 51c of the compaction shoe 51. The compaction side 51c includes a compaction surface 51c and the terms are used synonymously herein.

The compaction surface 51c is configured to press the tow material 22 against the mould 3. The compaction surface 51c may be configured to permit the tow material 22 to pass between the compaction shoe 51 and the mould 3 as the compaction shoe 51 (and the tape laying head 1, for example) moves across the mould 3 to lay the tow material 22. The compaction surface 51c may be a substantially smooth surface and may have a relatively low coefficient of fiction to enable the compaction shoe 51 to slide over the laid tow material 22.

The trailing edge of the compaction shoe 51 represents the final part of the compaction shoe 51 which presses the tow material 22 against the mould 3 as the compaction shoe 51 moves with respect to the mould 3 during a normal laying operation. This might also be called, therefore, the rear edge of the compaction shoe 51 or, more specifically, the rear edge of the compaction surface 51c (with rear (and front) defined by virtue of the direction of travel of the compaction shoe 51 with respect to the mould 3).

The compaction shoe 51 may also include a leading edge. The leading edge may oppose the trailing edge across a width of the compaction shoe 51 (and that width may be at the base of the compaction shoe 51). The leading edge may delineate between the second side 51b of the compaction shoe 51 and the compaction side 51c of the compaction shoe 51.

The leading edge of the compaction shoe 51 represents the first part of the compaction shoe 51 which presses the tow material 22 against the mould 3 as the compaction shoe 51 moves with respect to the mould 3 during a normal laying operation (this may be a shear boundary as described herein). This might also be called, therefore, the front edge of the compaction shoe 51 or, more specifically, the front edge of the compaction surface 51c (again, with front (and rear) defined by virtue of the direction of travel of the compaction shoe 51 with respect to the mould 3).

In some versions, the trailing edge may be a relatively sharp edge - in that the first side 51a may meet the compaction side 51c along a thin edge (i.e. with a relatively small radius). In some versions, the leading edge may be a relatively rounded edge - in that the second side 51b may meet the compaction side 51c along a curved edge (in cross-section) with a relatively large radius (compared to the aforementioned thin edge).

The trailing and leading edges may both be substantially straight edges. In other words, the two edges may extend along substantially straight axes, respectively. The leading and trailing edges may be substantially parallel with respect to each other (e.g. the substantially straight axes may be substantially parallel to each other).

The second side 51b may have a curved surface, e.g. as depicted in figure 1, or could have a surface of a different form. In some versions, the second side 51b, e.g. as depicted, may have both generally flat and generally curved parts.

The second side 51b may be configured (e.g. shaped and sized) to receive - at least partially - a tow guide roller 52. The tow guide roller 52 may, therefore, be part of the shearing mechanism 51 and may be located adjacent the compaction shoe 51. In particular, the tow guide roller 52 may be located adjacent the second side 51b of the compaction shoe 51.

The tow guide roller 52 may be located such that the tow material 22 may pass a portion of the tow guide roller 52 adjacent the compaction shoe 51 prior to that tow material 22 reaching the compaction shoe 51. In other words, the tow guide roller 52 may be located upstream of the compaction shoe 51 in terms of the path of the tow material 22 through the shearing mechanism 5.

It should be appreciated that the tow material 22 has a path of travel from the tape supply 4 to the shearing mechanism 5 and that this path is formed from various parts through the tape laying head 1. The tow material path may - in places - be the same as the tape path and the terms may be synonymous. However, typically the tape path is a reference to the path of the tape 2 (i.e. of the tow material 22 and the backing material 21, if provided) whereas the tow material path may or may not be a path for the backing material too. The paths (tow material or tape) have an upstream and a downstream direction which are defined by the normal direction of travel of the tow material 22 or tape 2, as the case may be, during a laying operation - i.e. generally from the tape supply 4 towards the shearing mechanism 5 (and, in particular, towards the compaction shoe 51).

The tow guide roller 52 may be may be configured to rotate about an axis which is generally parallel with the leading edge of the compaction shoe 51. The tow guide roller 52 may have an outer surface made from silicone, in some embodiments.

The shearing mechanism 5 may include a gripping shoe 53 (which may also be called a tow feed shoe, for example). The gripping shoe 53 may be located adjacent the tow guide roller 52 such that the tow material may pass between the gripping shoe 53 and the tow guide roller 52. In other words, at least part of the tow material path (and, in some instances, the tape path) may be defined between the tow guide roller 52 and the gripping shoe 53.

The gripping shoe 53 may be formed from a generally elongate member which is pivotably mounted with respect to the tow guide roller 52 such that a distance between at least part of the gripping shoe 53 and at least part of the tow guide roller 52 may be varied by rotation of the gipping shoe 53 about its pivotable mount 53a (the pivotable mount 53a may form part of the shearing mechanism 5). As depicted, for example, the gripping shoe 53 may have a distal end adjacent the tow guide roller 52 and a proximal end (which opposes the distal end). The pivotable mount 53a may be located between the proximal and distal ends of the gripping shoe 53.

The distal end of the gripping shoe 53 may be shaped to increase a surface area over which the tow material 22 (or tape 2) may be pinched between the tow guide roller 52 and the gripping shoe 53. Accordingly the distal end of the gipping shoe 53 may be curved and the degree of curvature may generally match the circumferential shape of at least part of the tow guide roller 52.

Rotational movement of the gripping shoe 53 about the pivotable mount 53a may vary a distance between at least part of the gripping shoe 53 (e.g. part of the distal end thereof) and the tow guide roller 52. Rotational movement of the gripping shoe 53 about the pivotable mount 53a may vary a force applied to tow material 22 or a tape 2 between at least part of the gripping shoe 53 (e.g. part of the distal end thereof) and the tow guide roller 52 (this force may be a compressive force or, in other words, a gripping or pinching force).

The gripping shoe 53 may include a resilient biasing arrangement 54 - such as a spring which may be a helically wound spring, for example - which is configured to bias the distal end of the gripping shoe 53 towards the to guide roller 52. In some versions, the resilient biasing arrangement 54 includes a pneumatic or hydraulic ram.

Accordingly, the tow material 22 may follow a tow material path between the tow guide roller 52 and the gripping shoe 53 (in a gripping zone), before passing to the compaction shoe 51, which may press the tow material 22 onto the mould 3 (i.e. may lay the tow material 22 onto the mould 3), in a pressing zone.

In some versions, the tow material 22 may be accompanied by the backing material 21 though the path between the tow guide roller 52 and the gripping shoe 53 (i.e. in the gripping zone). As such this part of the path may be described as a tape path as well. As the tape 2 leaves the path defined between the tow guide roller 52 and the gripping shoe 53, the backing material 21 may be removed from the tow material 22. In other words, as the tape 2 leaves the gripping zone, the backing material 21 may be separated from the tow material 22. The backing material 21 may, in some versions (such as in figure 1) pass around an extreme distal end of the gripping shoe 53.

The extreme distal end of the gipping shoe 53 may be the extreme part of the distal end, thereof. The extreme distal end of the gripping shoe 53 may be sized and/or shaped (e.g. may have a suitable radius) to aid in separation of the backing material 21 from the tow material 22.

The backing material 21 may, therefore, follow a backing material path from the gripping shoe 53. This path may extend to or towards the backing material collector 6, which may be downstream (with respect to the path and the normal direction of movement of the backing material 21) of the shearing mechanism 5.

The last part of the gripping shoe 53 which the tow material 22 contacts (on its way towards the compaction shoe 51) will be referred to as the gripping edge in some embodiments and may be an linear portion of the gripping shoe 53 which may extend parallel to the leading edge of the compaction shoe 51 -this edge may be a shearing boundary as described herein.

As will be understood, the shearing mechanism 5 may be configured to move with respect to the mould 3 in a first direction. The first direction may be a laying direction, for example, and is generally from left to right in the depicted example of figure 3.

The shearing mechanism 5 may further be configured to move with respect to the mould 3 in a second direction, the second direction being generally perpendicular to the first direction (e.g. into and out of the page in the depicted example of figure 1). This second direction may be a shearing direction and is intended to subject the tow material 22 to shear deformation. As will be appreciated, this second direction may be a direction parallel to the trailing edge, the leading edge, and/or the axis of rotation of the tow guide roller 52.

Movement of the shearing mechanism 5 in the first direction may be driven by the tape laying head 1 moving relative to the mould 3 in the first direction. Movement of the tape laying head 1 in the first direction relative to the mould 3 may be driven by movement of a part of the tape laying system 100 to which the tape laying head 1 is mounted (relative to the mould 3). The tape laying system 100 may, to this end, include a gantry to which the tape laying head 1 is mounted (the same gantry may have a plurality of tape laying heads 1 mounted thereto).

Movement of the shearing mechanism 5 in the second direction may be driven by the tape laying head 1 moving relative to the mould 3 in the second direction. Movement of the tape laying head 1 in the second direction relative to the mould 3 may be driven by movement of a part of the tape laying system 100 (such as the gantry) to which the tape laying head 1 is mounted (relative to the mould 3). In some embodiments, movement of the shearing mechanism 5 in the second direction may be driven movement of the shearing mechanism 5 with respect to the tape laying head 1 in the second direction.

Accordingly, the shearing mechanism 5 may be configured to provide shear deformation of the tow material 22 - referred to as tow steering or shear tow steering, for example. In some embodiments, the shearing mechanism 5 may take a different form. For example, the compaction shoe 51 may be in the form of a roller. Similarly, the gripping shoe 53 may likewise be in the form of a roller, for example. In any event, the shearing mechanism 5 may provide a pair of shearing boundaries.

### The backing material collector

The backing material collector 6 may include a bobbin 61 (which to distinguish this bobbin 61 from the bobbin 41 may be referred to as a collection bobbin 61, with the other bobbin 41 referred to as a supply bobbin 41, for instance) - see figure 1, for example. The collection bobbin 61 may be configured to receive and collect the backing material 21 following separation from the tow material 22. In other words, the used backing material 21 may be wound around the collection bobbin 61 during operation of the tape laying head 1 and/or system 100.

The backing material collector 6 may include a creel which may be configured to receive and support the collection bobbin 61. In some versions there is a plurality of collection bobbins 61 and each of the collection bobbins 61 is received and supported by the creel. The creel may be a separate creel to that of the tape supply 4 and so may be called a collection creel (with the other creel referred to as a supply creel). In some versions, however, the creel is shared such that the supply creel and the collection creel are the same creel (i.e. the same creel structure).

As described, the backing material collector 6 may form part of the tape laying head 1 or part of the wider tape laying system 100.

The backing material collector 6 may be configured to receive backing material 21 from the shearing mechanism 5 and, as such, a backing material path may be defined between the shearing mechanism 5 and the backing material collector 6. This backing material path may be formed, at least in part, by the tape laying head 1. One or more parts of this backing material path may be defined by a tube through which the backing material 21 may pass, for example.

In some versions, the backing material collector 6 is configured to receive backing material 21 from a plurality of tape laying heads 1 of the tape laying system 100 (e.g. in versions in which there are multiple tape laying heads 1 as part of the tape laying system 100). The backing material collector 6 may, therefore, include at least one bobbin 61 for each tape laying head 1 - such that separate backing material 21 may be received from each tape laying head 1. In some versions, more than one strip of backing material 2 is received, in parallel, from a single (i.e. one and only one) tape laying head 1 (and there may be multiple such tape laying heads 1 which each provide multiple strips of backing material 21 from the backing material collector 6 in parallel).

The or each bobbin 61 may be removable such that the backing material collector 6 may include a creel 62 configured to receive one or more bobbins 61. The backing material collector 6 may at least partially define one or more backing material paths through which backing material 21 is configured to pass towards the backing material collector 6 (or collectors 6, as the case may be).

In versions in which the backing material 21 is an endless loop, the backing material path may pass from the shearing mechanism 5 to the backing material collector 6 and then back to the shearing mechanism 5 (at the shearing mechanism 5, that path may pass between the tow guide roller 52 and the gripping shoe 53 as described in relation to the versions in which the backing material 21 is part of the tape 2 and not an endless loop).

### Operating principle

Accordingly, therefore, versions may be used to lay tow material 22 on the mould 3 in which shearing of the tow material 22 is used to steer the tow material 22 being laid - as described in GB2492594 and/or WO2022/058703.

### Compaction shoe

Versions of the present technology may relate, for example, to developments relating to the compaction shoe 51.

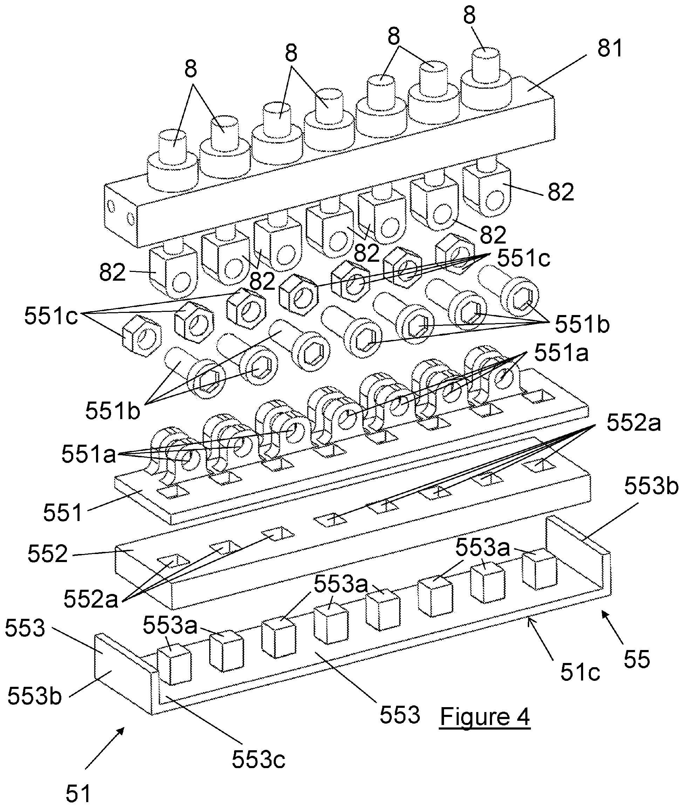

With reference, therefore, to figure 4 a version of the compaction shoe 51 may be an elongate compaction shoe 51 which may be configured for use in relation to one or more tapes 2 (e.g. with a plurality of tapes 2 distributed to be compacted by different parts of the length of the compaction shoe 51).

The compaction shoe 51 may include or may be mounted to a plurality of actuators 8 (which provide prismatic joints). The actuators 8 are distributed along the length of the compaction shoe 51 and/or with respect to a length of the compaction surface 51c. Accordingly, each actuator 8 may be located adjacent a different part of the compaction shoe 51 and/or compaction surface 51c. Each actuator 8 may be pneumatically or hydraulically or electrically operated such that a piston of the actuator 8 is moveable with respect to a cylinder of that actuator 8 in an axial manner. Each piston may be biased pneumatically or hydraulically or electrically into an extended or partially expected configuration with respect to the cylinder of that actuator 8.

Each actuator 8 may include a piston and cylinder, for example. Each actuator 8 may include a solenoid with a piston or plunger. Each actuator 8 may include a motor, such as a stepper motor which may drive, for example, one or more gears (e.g. in a rack and pinion arrangement). In some versions there are one or more actuators 8. Not all of the actuators 8, if there is a plurality, needs to be the same type of actuator 8. Moreover, the biasing force generated by each actuator 8 need not be the same force and the selection of biasing forces may be based, at least in part, on the shape of the mould 3.

The actuators 8 (e.g. the cylinders thereof) may be mounted to a mounting block or frame 81 which may be moved with the gantry or robotic arm, as descried herein, and which may form part of the shearing mechanism 5.

The actuators 8 (e.g. the pistons thereof) may extend towards the compaction shoe 51 or a compaction shoe configuration 55 of the compaction shoe 51. This may be a direction generally perpendicular to the direction of travel of the tape 2 past the compaction shoe 51. The actuators 8 (e.g. the pistons thereof) may include respective mounting tabs 82. Each mounting tab 82 may be a planar member through which an aperture is defined, with the aperture being perpendicular to surfaces of the mounting tab 82 through is it is defined and with the aperture generally parallel to the direction of travel of the tape 2 past the compaction shoe 51 and/or to the movement of the shearing mechanism 5 with respect to the mould 3.

In some versions, the actuators 8 may include one or more actuators 8 which may be configured to extend at least partially in a direction parallel to the direction of travel of the tape 2 past the compaction shoe 51 or compaction shoe configuration 55. These one or more actuators 8 may, therefore, be used to move at least part of the compaction shoe 51 or compaction shoe configuration 55 in a direction parallel to the direction of travel of the tape 2 relative to another part of the compaction shoe 51 or compaction shoe configuration 55. This may be referred to as advancing or retreating a part of the compaction shoe 51 or compaction shoe configuration 55 (i.e. advancing or retreating a part thereof relative to another part thereof in the tape's 2 direction of travel). In some versions, one or more further actuators oriented perpendicular to the one or more actuators 8, and configured to move the or each actuator 8, may be configured to perform the advancing or retreating movement - e.g. independently of the operation of the or each actuator 8.

The compaction shoe configuration 55 may include a mounting member 551, a compressible member 552, and a compaction member 553 (which may in some versions be referred to as the compaction shoe 51).

The mounting member 551 may be configured to couple the compaction shoe configuration 55 to the actuators 8 and may, therefore, including a plurality of coupling arrangements 551a configured to engage with the actuators 8. For example, each coupling arrangement 551a may include a pair of spaced apart projections through which an aperture is defined and between which a mounting tab 82 of one of the actuators 8 is configured to be received. The apertures in the projections may align with the apertures in the mounting tabs 82 to enable bolts 551b to be passed therethrough and secured with respective nuts 551c, for example. This may, therefore, form respective knuckle joints. The nut 551c may include a nylon locking ring and the nut 551c may be only loosely tightened on the bolt 551b to ensure free movement of the knuckle joint.

The engagement of the actuators 8 and the mounting member 551 may enable rotational movement of a part of the mounting member 511 with respect to another part of the mounting member 551 about an axis which is generally parallel to the direction of travel of the compaction mechanism 5 with respect to the mould 3, for example (in other words, generally parallel to the direction of travel of the tape 2 with respect to the compaction shoe 5). In some versions, this axis may be oriented differently (e.g. to enable advancing and retreating as described herein). The mounting member 551 may, therefore, be sufficiently flexible to allow some such rotational movement. The mounting member 551 may include one or more recesses between the projections to assist in providing this flexibility (with the recesses being elongate, for example, and extending in a direction which is generally parallel to the direction of travel of the compaction mechanism 5 with respect to the mould 3, for example (in other words, generally parallel to the direction of travel of the tape 2 with respect to the compaction shoe 5).

The mounting member 551 may be configured to engage the compressible member 552. In some versions, the compressible member 552 is configured to engage a side of the mounting member 551 which opposes a side from which the coupling arrangement 551a (e.g. the projections) extend. This opposing side may be referred to as the underside, for example. The mounting member 551 may include one or more recesses or apertures which are configured for use in securing the mounting member 551 with respect to the compaction member 553.

Accordingly, the compaction member 553 may include one or more protrusions 553a each of which is configured to pass through a respective aperture 552a in the compressible member 552 and which may be at least partially received by the one or more recesses or apertures of the mounting member 551, such that the mounting member 551 may move closer to and further away from the compaction member 553 with the compressible member 553 sandwiched therebetween.

The compressible member 552 may be formed from a compressible material such as a foamed polymer or a bladder filled with a gas or a liquid, for example.

For example, in some versions, the compressible member 552 may include one or more bladders filled with a gas or liquid and which may be connected in fluid communication with a fluid delivery system (which may include one or more pumps and/or valves) which may be configured to provide gas or liquid to the or each bladder and/or to extract gas or liquid from the or each bladder. In some versions, there are a plurality of such bladders which may be connected in fluid communication with each other in series or in parallel. In some versions, each such bladder may be independently connected in fluid communication with the fluid delivery system - such that gas or liquid may be delivered to or extracted from each bladder independently of the other bladders.

In some versions, the connection between the fluid delivery system and the or each bladder may be using one or more flexible hoses. In some versions, the connection between the bladders may be using one or more flexible hoses.

The or each bladder and/or flexible hose may be formed from one or more polymer materials, for example.

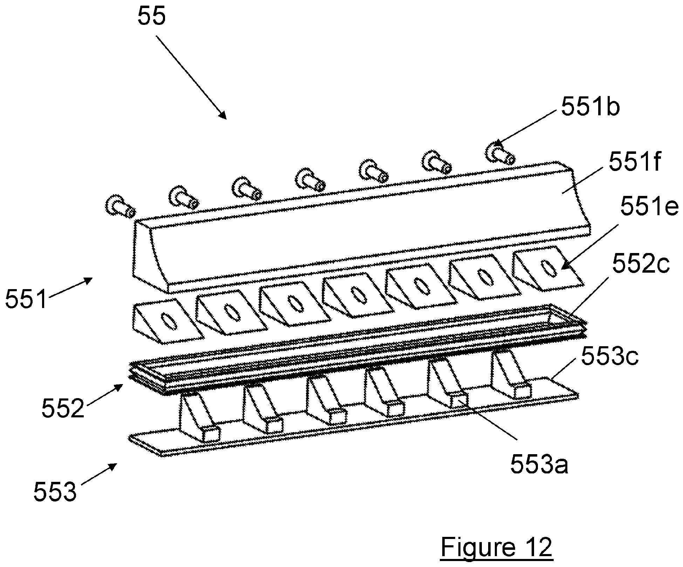

In some versions, see figure 12 for example, a skirt 552c may be provided. The skirt 552c may be formed from or more polymer materials. In some versions, the skirt 552c may include a top seal and a bottom seal. The top and bottom seals may be circumferential seals and may be located on opposing parts of the skirt 552c. The skirt 552c may, in some versions, be a continuous loop such that the skirt 552c defines and substantially surrounds a passage. The loop may be of any suitable shape, including elliptical, circular, square or (as depicted) rectangular.

In some versions, the skirt 552c includes a permitter wall which may extend between the top and bottom seals, for example. The permitter wall may include one or more contours, living hinges or the like, which seek to allow the permitter wall to collapse in a generally uniform manner. Such features of the permitter wall may be such that they encourage the skirt 552c to fold in a predetermined manner, for example.

In some versions, the skirt 552c may be configured to be connected (e.g. sealingly connected) to parts of the compaction shoe configuration 55 (e.g. adhered or otherwise bonded thereto). For example, the skirt 552c may be configured to be connected between the compaction member 553 (e.g. a plate 553c thereof) and a part of the mounting member 551 (e.g. the body 551f). In some versions, the top seal is connected to the mounting member 551 and the bottom seal is connected to the compaction member 553. Accordingly, the skirt 552c may form a collar between these two parts and may at least partially define a volume into which fluid (e.g. gas or liquid) may be delivered or extracted (e.g. by a fluid delivery system) to expand or contract the skirt 552c - so moving or allowing movement of the compaction member 553 with respect to the mounting member 551. That volume may be further at least partially defined by the compaction member 553 (e.g. the plate 553c) and the mounting member 551 (e.g. the body 551f). The volume may be connected in fluid communication with the fluid delivery system, for example, and this connection may be via one or more hoses, for example (may be flexible or rigid hoses). Extraction of fluid from the volume may move or allow movement of (with a lower external force) the compaction member 553 with respect to the mounting member 551. This movement may cause the skirt 552c to fold in the predetermined manner, for example, or otherwise move to allow the movement of the compaction member 553 with respect to the mounting member 551. The fluid delivery system may be connected in fluid communication with the volume through an aperture defined by the body 551f, for example.

Accordingly, the compaction member 553 may move, against or with the force provided by the gas or liquid in the volume, such that the compaction member 553 can more closely follow the surface of the mould 3 - see herein.

The compaction member 553 may be generally elongate (as may the compressible member 552 and/or the mounting member 551, along either or both of these may be provided in multiple parts positioned along the length of the elongate compaction member 553). The compaction member 553 includes the compaction surface 51c (which may be located opposite a surface from which the one or more protrusions 553a project), which may be a surface of the plate 553c forming part of the compaction member 553. The compaction member 553 may include distal limit members 553b, and one such distal limit member 553b may be located at either end of the elongate compaction member 553. Each distal limit member 553b may extend generally in the same direction as the one or more protrusions 553a. The distal limit members 553b and/or the one or more protrusions 553a may be configured to inhibit movement of the mounting member 551 and/or the compressible member 552 (in a direction parallel to its length) beyond the ends of the compaction member 553.

In versions with the skirt 552c, the protrusions 553a may be surrounded - at least in part - by the skirt 552c.

The compressible member 552 and the compaction member 553 may be configured to flex with the mounting member 551.

The compressible member 552 may bias the compaction member 553 outwardly (away from the mounting member 551).

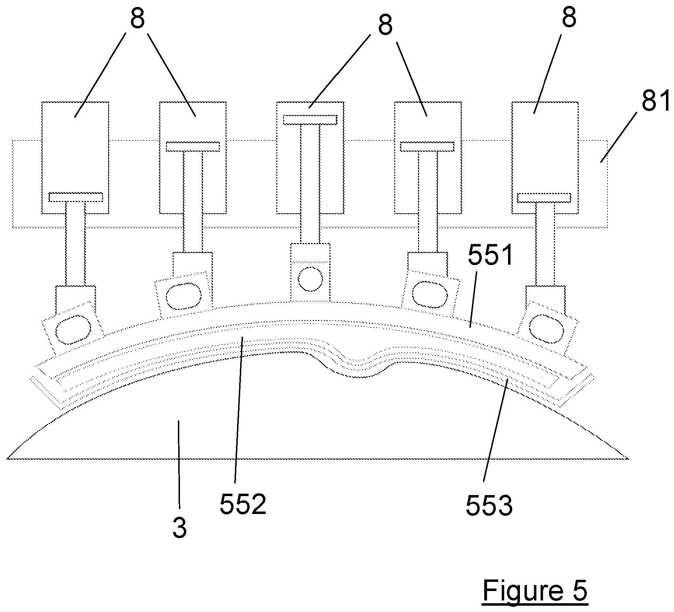

Accordingly, the actuators 8 may be used to press the mounting member 551 towards the mould 3. When the compaction member 553 contacts the mould 3 (with the tow material 22 between the mould 3 and the compaction member 553 in use), further force applied by the actuators 8 may cause the mounting member 551 to compress the compressible member 552. The compaction mechanism 5 may be moved with respect to the mould 3. As the compaction member 552 passes over the mould 3, the actuators 8 may be operated to provide a predetermined compaction force. If the mould 3 surface is curved, the actuators 8 may operate to provide a correspondingly curved compaction member 553. In some versions, a substantially uniform force is applied to the mould 3 by the compaction member 553 along its length. If a particular part (e.g. a local region) of the surface of the mould 3 (or of earlier layers of tow material 22 laid on the mould 3) does not follow the curve (i.e. the general surface curvature (e.g. has a surface imperfection or undulation)), then the compressible member 552 may compress or expand in that local region so that the compaction member 553 may more closely follow the mould 3 surface. This helps to avoid, for example, voids being formed in the layers of tow material 22. This is schematically shown in figure 5 for example. The local region may have a dimension (e.g. a width defined in a direction perpendicular to the direction of travel of the compaction member 552 across the surface of the mould 3) which is less than the distance between two adjacent actuators 8, for example.

The actuators 8 may be actively or passively operated.

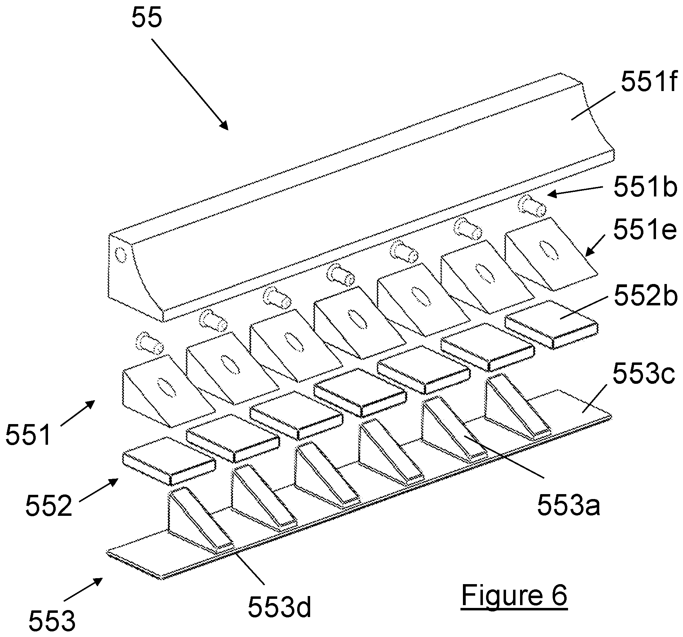

A variation is also depicted in figures 6, 7, and 8. In this version, the mounting member 551 includes a body 551f with a hollow structure (e.g. defining a hollow cavity) generally in the form of the upper part of the external configuration of the compaction shoe 51. A bottom of the body 551f may define an aperture providing access to the hollow cavity. A side surface of the body 551f of the mounting member 551 may define an array of apertures configured to receive respective bolts or screws 551d. The body 551f may be rigid and may or may not be coupled to one or more actuators 8. In some versions, the body 551f is coupled to one or more actuators 8 which form part of the shearing mechanism 5. In some versions, the body 551f is coupled to one or more actuators 8 but these one or more actuators 8 form part of the robotic arm or gantry which support the compaction shoe configuration 55.

The mounting member 551 may further include a plurality of blocks 551e. Each block 551e may be configured to be received by the hollow cavity of the mounting member 551 and may define one or more apertures which are configured to align with respective ones of the apertures of the array of apertures, such that the bolts or screws 551d may pass through these apertures to secure the blocks 551e to the body 551f. The blocks 551e may each have a triangular cross-section, for example, or may otherwise be shaped to correspond with an internal shape of the hollow cavity. The blocks 551e may be all of substantially the same size and shape, or there may be one or more blocks 551e of a different size and/or shape. The blocks 551e may be provided along a length of the mounting member 551, for example.

In this version, and some others, the compressible member 552 is provided as a plurality of separate compressible segments or parts 552b. Each compressible segment or part 552b may be secured (e.g. through bonding, such as an adhesive) to one or more of the blocks 551e. In some versions, the blocks 551e and their associated compressible segments or parts 552b may have generally the same length and/or width. In some versions, the separate blocks 551e may not be provided and their function may be part of the function of the body 551f (e.g. such that each compressible segment or part 552b may be secured (e.g. through bonding, such as an adhesive) to the body 551f. The compressible segments or parts 552b may be a foamed polymer material or a bladder filled with a gas or a liquid. In some versions, the compressible member 552 may be provided by the volume at least partially defined by the skirt 552c - see herein.

Replacement of individual blocks 551e and their associated compressible segments or parts 552b may be possible by removal of the associated bolt or screw 551d to detach the block 551e (and so also the compressible segment or part 552b) from the body 511f (and then reattachment of another block 551e and its compressible segment or part 552b).

There may be a space defined between each block 551e. This space may also be defined between each compressible segment or part 552b. Accordingly, the blocks 551e and compressible segments or parts 552b, when fitted to the body 551f, may define at least one slot therebetween and, in some versions, a plurality of such slots.

The compaction member 553 may be generally in the form of a plate 553c which may be generally in the form of the lower part of the external configuration of the compaction shoe 51 and which may provide the compaction surface 51c.

The compaction member 553 may include one or more protrusions 553a and, in some such versions, each of these protrusions 553a is configured (e.g. shaped and sized) to be received (at least in part) by the space or spaces (e.g. slots) defined between the blocks 551e and/or compressible segments or parts 552b. Accordingly, the one or more protrusions 553a may be at least partially received within the hollow cavity of the body 551f. The one or more protrusions 553a may be of the same size and shape as each other or may include at least one protrusion 553a which is of a different size and/or shape to another of the one or more protrusions 553a. The one or more protrusions 553a may be generally triangular in cross-sectional shape, for example, although other shapes are also possible (e.g. square cross-sectional shape). The one or more protrusions 553a may be integrally formed with the plate 553c or may be adhered or otherwise secured thereto (e.g. by welding). The or each protrusion 553a, so received by the body 551f, may help to restrict unwanted movement of the compaction member 553 in the direction parallel to the direction of travel of the tape 2 relative to the compaction member 553 and/or perpendicular thereto.

As described the compaction member 553 may be flexible in order to allow for the compaction member 553 to follow undulations in the surface of the mould 3.

The compressible member 552 may bias the compact member 553 outwardly from the mounting member 551 (as described in relation to other versions) such that the compaction member 553 can more closely follow the surface of the mould 3.

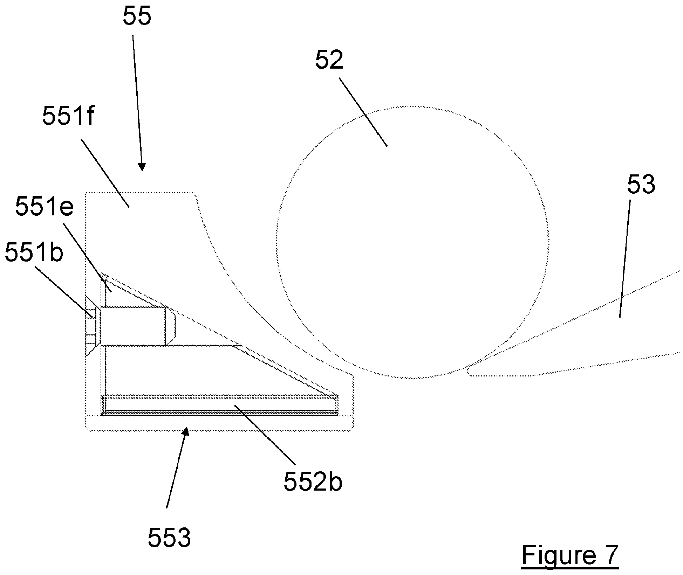

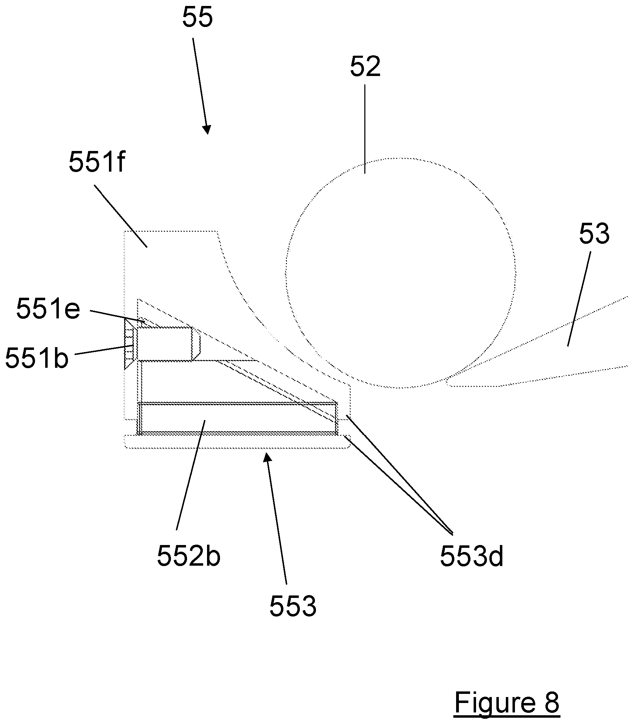

In some versions, the compaction shoe configuration 55 may be pressed into the mould 3 (e.g. by the gantry or robotic arm) so that the compressible member 552 is fully compressed - see figure 7, for example. In some versions, this fully compressed state may be defined by virtue of the compressibility of the compressible member 552 but, in some versions, the compaction member 553 may include one or more abutment surfaces which are configured to abut corresponding surfaces of the mounting member 551 so that the fully compressed state is the state in which these surfaces abut on compression of the compressible member 552 (the abutment substantially inhibiting or preventing further compression of the compressible member 552). In such versions, the compressible member 552 (or part thereof) may at least partially decompress along a part thereof (or even along the entire length thereof - see figure 8 for example) when a distance between the mounting member 551 and the mould 3 increases - to seek to keep the compaction member 553 in contact with the mould 3 (or other layer of tow material already laid) and/or to seek to maintain a force on the mould 3 through the compaction member 553 which is above a threshold and/or substantially constant.

In some versions, the abutment surfaces may be provided be respective lips or edge surfaces 553d of the mounting member 551 and compaction member 553 (although other configurations are envisaged).

As described, the compaction member 553 may be a flexible member and may be formed from a polymer material. In some versions, the compaction member 553 is formed from PTFE.

The compaction member 553 may be bonded (e.g. using an adhesive) to one or more of the compressible member 552, and the mounting member 551 to inhibit release of the compaction member 553 from the mounting member 551 if the compaction member 553 is lifted from the mould 3, for example.

### Cellular System

In some versions, a plurality of tape laying heads 1 may be provided in the system 100. In previous systems 100, the tape laying heads 1 have been aligned with each other and with the tape laying heads 1 in a fixed positional relationship with respect to each other.

Some versions of the present technology may be particularly useful for laying tape material 2 onto single or double curvature mould 3 surfaces. Some such versions may be particularly useful for laying tape material 2 onto moulds 3 with ramps and/or valleys.

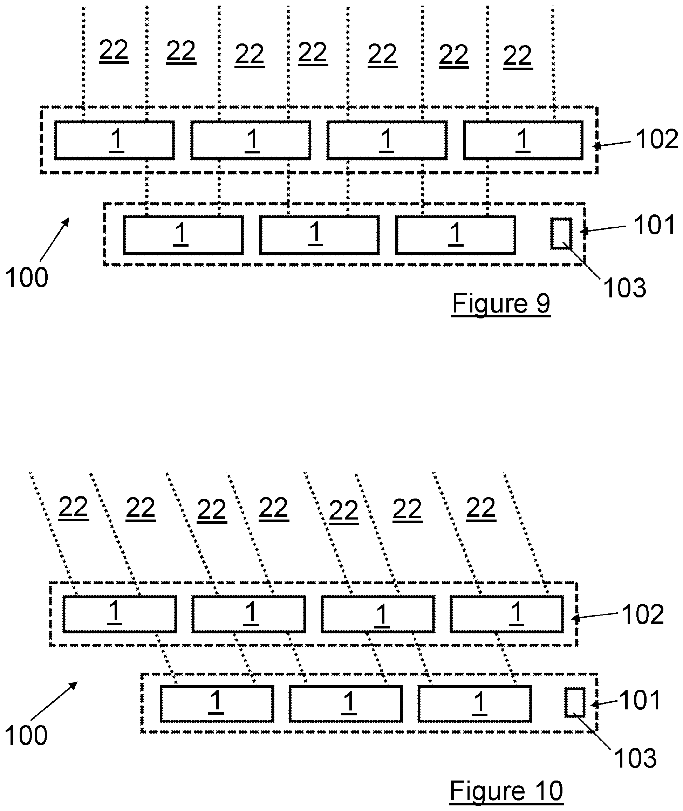

Versions of the present technology may provide different arrangements of tape laying heads 1 in a system 100 - see figures 9 and 10 which show one such different arrangement.

As previously described, the tape laying heads 1 may be provided on a gantry or robotic arm of the system 100. Each tape laying head 1 may include at least one actuator 8 (which provides a prismatic joint) as described herein, for example. The or each actuator 8 is configured to bias the compaction member 553 of the compaction shoe configuration 55 (of the shearing mechanism 5) of the tape laying head 1 towards the mould 3 in use.

The tape laying heads 1 may include one head 1 which is biased by one or more actuators 8 independently of another of the heads 1. In some versions, each tape laying head 1 is biased independently, by one or more actuators 8, of the other tape laying heads 1. This may be viewed as biasing along a z-axis, for example. Accordingly, the tape laying head 1 may generally move over the mould 3 along an x-axis (with the y-axis being perpendicular to the x-axis and z-axis).

Each tape laying head 1 may be configured to lay a single tow 22b (which may be formed of multiple reinforcement fibres 22a, for example).

In order to lay a wider track of tow material 22 than is possible with a single tape laying head 1, then the multiple tape laying heads 1 may be operated together in the system 100.

In some versions, there may be two rows of tape laying heads 1 provided. The two rows may include a leading row 101 and a trailing row 102. As the system 100 is operated, the leading row 101 may traverse the mould 3 in advance of the trailing row 102.

The tape laying heads 1 of the leading and trailing rows 101,102 may be arranged in an alternating manner such that a tape laying head 1 in the trailing row is generally aligned with the juncture between two tape laying heads 1 in the leading row (in the y-axis direction). The tape laying heads 1 may be configured for use in relation to the same mould 3. Therefore, in some versions, the tape laying heads 1 in the leading and trailing rows 101,102 may provided generally in a common plane, which may be perpendicular to the z-axis (although this need not be the case).

The tension of the tow material 22 laid by a particular tap laying head 1 may be set (or controlled) independently for one head 1 independently of another of the heads 1. In some versions, each tape laying head 1 is configured to set (or control) the tension in the tow material 22 laid by that head 1 independently of the other tape laying heads 1.

The tape laying heads 1 in the leading row 101 may be generally aligned with each other. Likewise, tape laying heads 1 in the trailing row 102 may be generally aligned with each other. The leading row 101 and trailing row 102 may be parallel with each other.

The tow material 22 laid by the leading row 101 may, therefore, be interleaved with the tow material laid 22 by the trailing row 101. There may be some overlap between the tow material 22 laid by the two rows of tape laying heads 1. There may be no overlap between the tow material 22 laid by the two rows of tape laying heads 1. The tow material 22 laid by the leading row of tape laying heads 1 may be immediately adjacent the tow material 22 laid by the trailing row of tape laying heads 1.

In some versions, the trailing row 102 of tape laying heads 1 may be configured to move linearly with respect to the leading row 101 of tape laying heads 1 (e.g. in the y-axis direction) in order to allow for the shearing of the tow material 22. This may be achieved by movement of leading or trailing row 101,102 of tape laying heads 1 relative to the mould 3 and the other of the leading or trailing row 101,102 of tape laying heads 1. Accordingly, in some versions, the leading row 101 of tape laying heads 1 are mounted to a leading arm or gantry and the trailing row 102 of tape laying heads 1 are mounted to a trailing arm or gantry - such that the leading or trailing arm or gantry may be moved with respect to the other of the leading or trailing arm or gantry in order to move all of the tape laying heads 1 mounted thereto. There may be an actuator 103 provided, such as an electric motor, provided to move the leading row 101 with respect to the trailing row 102.

As each tape laying head 1 may be capable of movement towards to away from the mould 3 independently of another of the tape laying heads 1, the tape laying heads 1 may be able to maintain more contact and/or more contact with a more consistent force, between the tape laying heads 1 and the mould 3 (or, of course, tow material 22 already laid on the mould 3).

The tape laying heads 1, therefore, form cells of the system 100, with each cell laying tow material 2 in unison with others of the cells but also capable of some independent operation. The operation of the tape laying heads 1, therefore, may each exhibit the advantages of the compaction shoe configuration 55 described herein - with, for example, actuators 8 allowing the compaction member 553 to follow the general curvature of the mould 3 and the compressible member 552 allowing the compaction member 553 to follow the smaller changes in the mould 3 surface.

In some versions, there may be only a single row of tape laying heads 1 provided but with the spacing between each tape laying head 1 being generally the width of the tape material 2. Accordingly, a first pass may be performed, laying tape material 2 on the mould 3, and then a second pass may be performed laying tape material 2 on the mould but with the row of tape laying heads 1 offset with respect to their position in the first pass so that the second pass lays tape material 2 between the laid tape material 2 from the first pass.

### Roller cell

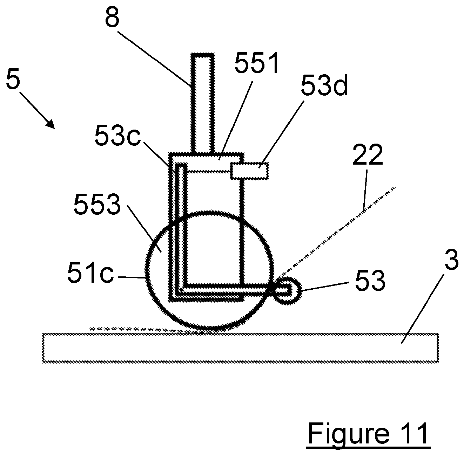

Some versions, see figure 11 for example, may include a tape laying head 1 which has a compaction shoe 51 or member 553 in the form of a roller. This type of tape laying head 1 may be particularly compact and so well suited to, for example, use in a cellular system 100 - as described herein.

This version may include one or more actuators 8 (as described herein) mounted to a mounting member 551. The connection between the or each actuator 8 and the mounting member 551 may not be jointed (i.e. may be a fixed connection). The or each actuator 8 may provide a prismatic joint between the mounting member 551 and the gantry or robotic arm. The mounting member 551 may carry a compaction member 553 which is, in this instance, in the form of a roller. There may be no compressible member 552 provided in some such versions or the compressible member 552 may be provided as a layer of the compaction member 553 or roller (e.g. an outer layer such that the compressible member 552 may form the compaction surface 51c too). The compaction member 553 may be configured for rotation with respect to the mounting member 551 as the compaction member 553 traverses the mould 3. Therefore, the axis of rotation of the compaction member 553 may be generally perpendicular to the direction of travel of the tape laying head 1 with respect to the mould 3. The compaction member 553 may be cylindrical in shape, for example.

The gripping shoe 53 may also, in some such and other versions, be provided as a roller (so the gripping shoe 53 described herein may be referred to also as a gripping member 53) which is configured to press against a part of the compaction member 553 with the tow material 22 therebetween (to provide one of the shearing boundaries).

In order to control the tow material 22 tension, the position of the gripping member 53 with respect to the compaction member 553 (and/or the force applied on the compaction member 553 by the gripping shoe 53) may be varied. To this end, the gripping member 53 may be mounted to a gripping member arm 53c of the tape laying head 1 and, in particular, of the shearing mechanism 5. The gripping member 53, in the form of a roller in this instance, may be configured for rotation with respect to the gripping member arm 53c, for example. The gripping member arm 53c may be configured for rotation with respect to the compaction member 553 and this may be achieved through a pivotable mounting to the mounting member 551, for example. A part of the gripping member arm 53c may be connected to an arm actuator 53d which is configured to drive movement of the gripping member arm 53c about the pivotable mounting. In some versions, the gripping member arm 53c is generally L-shaped, with the gripping member 53 mounted to one end, thereof, and the arm actuator 53d mounted to the other end, and the pivotable mounting provided at the corner of the L-shaped arm 53c.

In some versions, the tow material 22 may be supported by the backing material 21 described herein and the backing material 21 may be separated from the tow material 22 after the tape 2 (i.e. the tow material 22 and backing material 21) has passed the gripping member 53 (i.e. as the tape 2 emerges from between the gripping member 53 and compaction member 553). The backing material 21 may be collected by the backing material collector 6 (which may be a reel in this and other versions). The tension in the backing material 21 may be measured and controlled (e.g. by controlling the rate at which the tape 2 is delivered and/or the rate at which the backing material collector 6 collects the backing material 21. Therefore, for the avoidance of doubt, a tension control system as described in WO2022/058703 can be implemented in relation to this version of the technology.

The arm actuator 53d may be a pneumatically, hydraulically, or electrically operated actuator, for example.

### High angle transition zones

In some versions, the tape laying head 1 - which may be configured to be moved across the mould 3 by the robotic arm or gantry - may be controlled such that the tow material 22 and a longitudinal axis of the compaction shoe 51 are not perpendicular. In particular, the tape laying head 1 may be moved relative to the mould 3 such that, for example, the compaction shoe 51 is oriented to maintain both the contact between the mould 3 and the tow material 22 and between the compaction shoe 51 and the tow material 22. This contact may be maintained across the entire or substantially the entire width of the tow material at the compaction shoe 51. This contact may be maintained substantially throughout the traversal of a curve of a high angle transition zone of the mould 3. A high angle transition zone of the mould 3 may be a part of the mould 3, along a planned path for the tow material 22, which curves towards or way from the tape laying head 1 (e.g. upwardly or downwardly). For instance, such curves may be found on a spar or beam or strut. The curve of the high angle transition zone may provide part of the mould 3 which has a convex or concave form. The curve may provide a radius between two other surfaces of the mould 3.

Contact between the compaction shoe 51 and substantially the entire width of the tow material 22 around such a curve may be achieved by, for example, controlling the movement of the tape laying head 1 (through use of the gantry or robotic arm, for example) relative to the mould 3 such that the longitudinal axis of the compaction shoe 51 (which may extend across a width of the tow material 22) is parallel or substantially parallel with a length of a curve of the high angle transition zone (which may be an edge of a radius of the curve). This contact may be maintained generally irrespective of the angle of the tow material 22 with respect to the mould and/or with respect to the curve. As will be appreciated, the angle of the tow material 22 with respect to the compaction shoe 51 will depend on the angle between the tow laying path and the curve. This may impose a practical limit on the angle which can be achieved between the tow laying path and the curve, as too shallow an angle will result in excessive shearing of the tow material 22 and defects will occur. In some versions, angles of more than +/-80 degrees between the tow laying path and the compaction shoe 51 (during traversal of the curve of the mould 3) may result in such defects when traversing a curve in the above manner. Therefore, the tape laying head 1 may be controlled to avoid angles beyond this range. In some versions, angles of +/- 45 degrees are achieved between the tow laying path and the compaction shoe 51 (during traversal of the curve of the mould 3).

As will be appreciated, in this manner a more even compaction force can be applied to the tow material 22 as the material passes around the curve in the mould 3, reducing the likelihood of defects (compared to some conventional automated tow placement equipment), generally regardless of the angle of the tow laying path to a line of the curve (the line being a line defining an edge of the curve) - see above.

Such control of the orientation of the compaction shoe 51 with respect to the mould 3 as the compaction shoe 51 moves around the curve of the mould 3 may or may not use the compressible member 552 (which may or may not be present). In some versions, the compressible member 552 is present and, as such, the compressible member 552 can conform to the shape of the mould 3. Accordingly, not only can a relatively even compressive force be applied across a width of the tow material 22 as it passes around a single curve, but the same may be true if that single curve also, itself, curves. As such, in some versions, the length of the curve may be a line (e.g. axis) about which the radius of the curve could be defined, and that line may, itself, curve (e.g. the edge of the radius of the curve may be a curved edge). The degree to which such second curvatures can be accommodated with substantially uniform compressive force applied to the tow material 22 across a width by the compaction shoe 51 will depend on the characteristics of the compressible member 552.

Accordingly, in some such versions, the compaction member 553 may contact the tow material 22 and mould 3, pressing the tow material 22 into the mould 3. The orientation of the compaction member 553 may be controlled to maintain the pressing force across a width of the tow material 22 passing the compaction member 553 as it is applied to the mould 3. This may include aligning a longitudinal axis of the compaction member 553 (which may be parallel to the aforementioned width of the tow material 22) so that it is parallel with (or substantially parallel with) a line defining the centre of radius of the curve. That line may, itself curve, and so the compressible member 552 may provide at least a degree of conformity of the compaction member 553 with respect to that curved line to maintain the pressing force across the width of the tow material through this double curvature mould 3 portion.

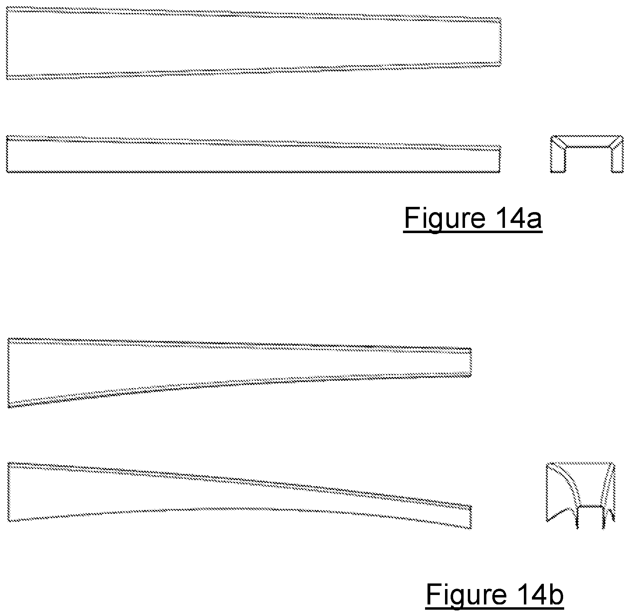

Such high angle transition zones may be found in beams, spars, and struts, for example - an example single curvature beam section is shown in figure 14a (from three different viewing angles) and a double curvature beam section is shown in figure 14b (again, from three different viewing angles). Such high angle transition zones may be found, in general, in relation to moulds 3 or components which have at least one curve of a convex radius. These are types of object which may be formed using the techniques disclosed herein. Versions of the techniques may be used in relation to convex curves.

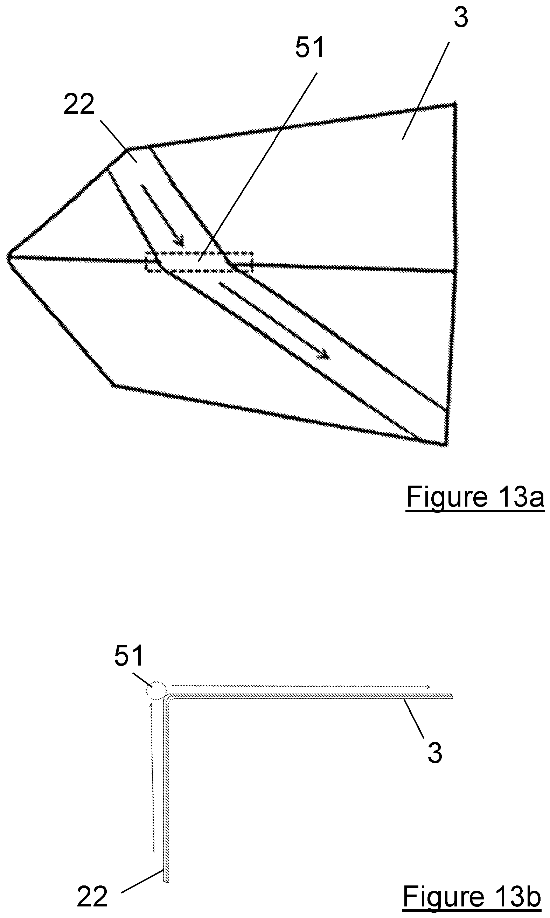

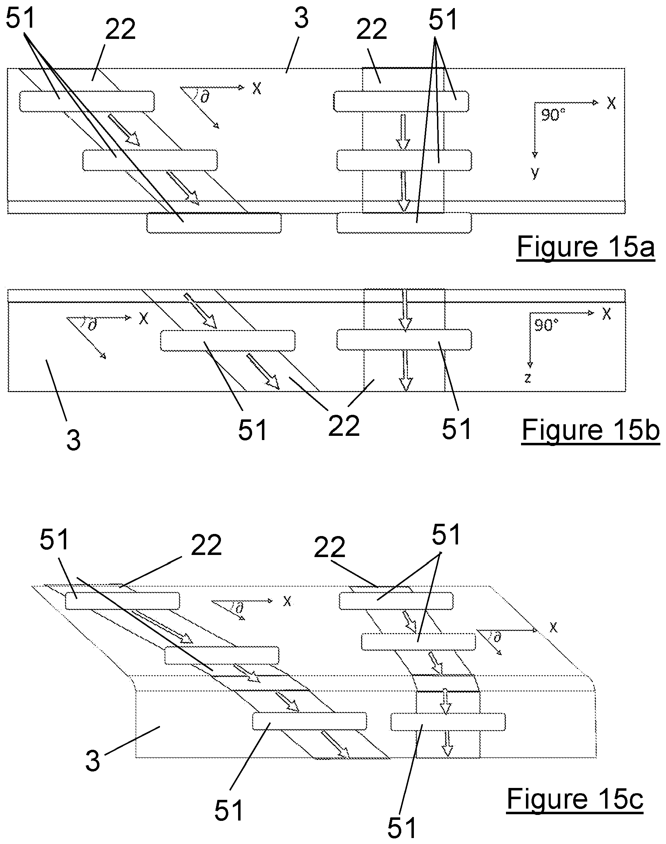

With reference to figures 13a and 13b, there is a schematic representation of this process in which the position and orientation of the compaction shoe 51 as the tow material 22 passes around the curve of the high angle transition zone is shown. Likewise, figures 15a-c shown a schematic representation of the process for two different tow laying paths - one at 90 degrees to the line of the curve and another at an angle ∂ to the line of the curve. In these figures, the position and orientation of the compaction shoe 51 is depicted at multiple different points in time and the arrows indicate the tow laying path and direction.

Notably, prior methods used in automated tow placement equipment may have required a limited tow width to be used for traversing curves (typically single curves at most). However, versions of the present technology can use the full width of tow material 22 for that tape laying head 1. In some versions, therefore, the width of the tow material 22 which can be used is decoupled from the configuration of the convex radius or high angle transition zone.

The tape laying head 1 can be used in such a manner because the direction of movement of the tape laying head 1 does not have to be maintained perpendicular to the longitudinal axis of the tape laying head 1 (and the shearing of the tow material 22 enables this).

Moreover, in some versions, the tow material 22 may be steered using shear deformation as the tape laying head traverses the high angle transition zone of the mould 3. This enables even greater freedom in how the tow material 22 is laid on the mould 3, without excessive defects being caused.

Accordingly, in such versions tow material 22 with few defects can be laid wherein the tow material 22 is not perpendicular to the line defined by the centre of curvature of the curve of the mould 3 along a length of the curve of the mould 3.

These techniques may be used in combination with the tape laying heads 1 disclosed herein and/or the system 100 disclosed herein, including the system 100 shown in figure 9 and 10, for example.

A high angle transition zone may be a part of the mould 3 in which the outer surface has a curve which requires the tow material 22 to move through more than 45°, or more than 65°, or more than 75°, or more than 85°, or more than 90°. The same techniques may be used in relation to shallower angle curves too.

These techniques may be particularly useful in traversing a curve of the mould 3 with tow material 22, wherein the path of the tow material 22 (i.e. the tow path) is not at 90 degrees to the line (e.g. axis) about which the radius of the curve could be defined (or the edge of a radius of the curve, for example). In other words, in situations in which the tow path is not perpendicular to the curve edge.

### Running tapering

When tow material 22 is laid using the tape laying head 1 of versions of the technology (e.g. with a shearing mechanism 5), then reducing the laid width of the tow material 22 using shearing necessarily results in an increase the thickness of the laid tow material 22.

In some use cases, there may be a need to reduce the width of the laid tow material 22 along a tow path. This may be needed, for example, to ensure that the part being made has the required structural properties, for example, and/or may be because the mould 3 has a tapering portion (e.g. such as part of a tapering spar, strut, or beam).

In some versions of the present technology, the tape laying head 1 and/or the compaction shoe 51 may be slewed along the tow path as the tow material 22 is laid on the mould 3. This may include rotationally sliding the compaction shoe 51 with respect to the tow material 22.

This sliding of the compaction shoe 51 is rotational movement of the compaction shoe 51 with respect to the tow material 22 and, as such, risks defects being created. Therefore, in some versions, the rate of rotational movement (i.e. the slew movement) is kept below a predetermined threshold. This rate may be a maximum angle of rotation (relative to the tow material 22) over a predetermined length of the tow material 22 as laid on the mould 3. Equally, the rate may be a maximum angle of rotation over time and different rates may be set depending on the speed of laying of the tow material 22.

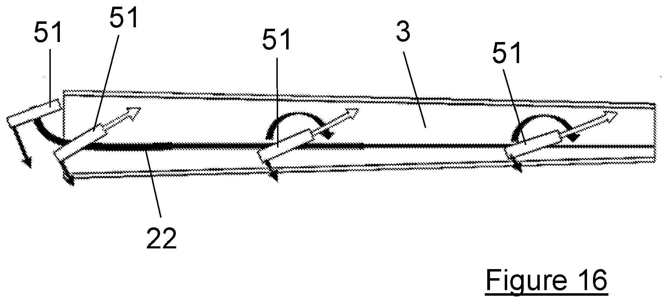

An example of this is shown in figure 16, for example, in which the width of the tow material 22 is to be reduced along the tapering length of the mould 3. The straight arrows in this figure represent the vectors of movement of the compaction shoe with the curved arrows showing the rotational movement of the compaction shoe 51.

During this process there may be no tow steering as described herein (although this need not be the case), such that the two material 22 is laid in a straight line (see figure 16, for example). However, as will be understood, the shearing angle - i.e. the angle of the tow material 22 with respect to a longitudinal axis of the compaction shoe 51 - will increase as the compaction shoe 51 is slewed. This results in a reduction in the width of the laid tow material 22 - as the fibres of the tow material 22 move closer together.

This may be described as slewing of the compaction shoe 51 or, indeed, of the tape laying head 1.

The compaction force (i.e. the force applied by the compaction shoe 51 to the mould 3) may need to be reduced (i.e. lower) than the compaction forced when tow steering, for example, in order to allow the slewing to occur without tow steering occurring.

Accordingly, by slewing the compaction shoe 51, the shearing angle of the tow material 22 caused by the tape laying head 1 is increased - to reduce the width of the tow material 22 laid on the mould 3 - but the steering angle is kept substantially constant or otherwise less than the shearing angle.

As will be appreciated, the operation of this technique means that the length of the compaction shoe 51 is not necessarily 90 degrees to the angle of the tow path but may be oriented at a non-perpendicular angle whilst tow shearing as described herein is still being performed.

The same technique may be used along a straight tow path or a curved tow path (when following a curved path, tow steering may be used, using the tow shearing as described herein, for example). Moreover, the width of the laid tow material 22 may be varied to increase or decrease the tow width along that tow path and this may be achieved independently of the tow steering, by slewing the compaction shoe 51.

As will be appreciated, slewing the compaction shoe 51 may be achieved by slewing the shearing mechanism 5 and references to slowing the compaction shoe 51 should be construed accordingly.

The effective limit of this process, i.e. the maximum reduction in width which can be achieved, will depend on a number of factors including the properties of the tow material 22.

### General

As will be appreciated, in some instances the term "shoe" has been used herein to refer both to a shoe and to alternatives such as a roller. The description should be construed accordingly.

When used in this specification and claims, the terms "comprises" and "comprising" and variations thereof mean that the specified features, steps or integers are included. The terms are not to be interpreted to exclude the presence of other features, steps or components.

Although certain example embodiments of the invention have been described, the scope of the appended claims is not intended to be limited solely to these embodiments.

## Claims

1. A shearing mechanism (5) for use in a tape laying head (1) configured to lay a tow material (22) on a mould (3) in the construction of a composite structure, the shearing mechanism (5) being configured to receive tow material (22) from a tow supply (4) and to steer the tow material (22) by applying shear deformation to the tow material (22) between a pair of shear boundaries defined by the shearing mechanism (5), the shearing mechanism (5) including a compaction shoe (51) configured to press the tow material (22) onto a mould (3), wherein the compaction shoe (51) includes:
a compaction member (553) at least partially defining one of the pair of shear boundaries,
a mounting member (551) configured to couple the compaction member (553) to the to another part of the shearing mechanism (5) or the tape laying head (1), and wherein the compaction shoe (51) further includes:
a compressible member (552) located between the compaction member (553) and the mounting member (551) such that compression and decompression of the compressible member (552) permits movement of at least part of the compaction member (553) towards and away from the mounting member (551), and/or
an actuator (8) configured to couple the mounting member (551) to the other part of the shearing mechanism (5) or the tape laying head (1) such that operation of the actuator (8) permits movement of at least part of the compaction member (553) towards and away from the mounting member (551).

2. A shearing mechanism (5) according to claim 1, wherein both the compressible member (552) and actuator (8) are provided as part of the compaction shoe (51).

3. A shearing mechanism (5) according to any preceding claim, wherein the compaction member (553) is a flexible elongate member.

4. A shearing mechanism (5) according to claim 3, wherein the compaction member (553) includes a plate (553c) configured to contact the mould (3), and optionally wherein the compaction member (553) includes one or more protrusions (553a) configured to inhibit movement of the compressible member (552) across a surface of the compaction member (553).

5. A shearing mechanism (5) according to any preceding claim, wherein the compressible member (552) includes a plurality of compressible segments or parts (552b); and/or wherein the compressible member (552) is formed from one or more of a foamed polymer and a bladder filled with a gas or liquid.

6. A shearing mechanism (5) according to any preceding claim, wherein the mounting member (551) is a flexible member.

7. A shearing mechanism (5) according to claim 6, wherein the mounting member (551) is an elongate member.

8. A shearing mechanism (5) according to claim 7, further including a plurality of actuators (8) configured to couple the mounting member (551) to the other part of the tape laying head (1), wherein the actuators (8) are distributed along a length of the elongate mounting member (551).

9. A shearing mechanism (5) according to claim 8, wherein each actuator (8) is coupled to the mounting member (551) by a knuckle joint.

10. A shearing mechanism (5) according to any of claims 1 to 5, wherein the mounting member (551) is a rigid member.

11. A shearing mechanism (5) according to claim 10 wherein the mounting member (551) includes a hollow body which is configured to receive, at least in part, the compressible member (552).

12. A shearing mechanism (5) according to claim 10 or 11 wherein the compressible member (552) includes a plurality of compressible parts or segments (552b), wherein each part or segment (552b) is coupled to a block, to secure the compressible part or segment (552b) to the mounting member (551).

13. A shearing mechanism (5) according to claim 1:
(i) wherein the compaction member (553) is in the form of a compaction roller configured to rotate with respect to the mounting member (551); or
(ii) wherein the compaction member (553) is in the form of a compaction roller configured to rotate with respect to the mounting member (551) and wherein the compressible member (552) is provided as a layer of the compaction roller; or
(iii) wherein the compaction member (553) is in the form of a compaction roller configured to rotate with respect to the mounting member (551) and the shearing mechanism, and the shearing mechanism further includes a gripping member (53) the form of a roller configured to define, with the compaction member (553), one of the pair of shear boundaries, and optionally wherein the compressible member (552) is provided as a layer of the compaction roller; or
(iv) wherein the compaction member (553) is in the form of a compaction roller configured to rotate with respect to the mounting member and the shearing mechanism, and the shearing mechanism (5) further includes a gripping member (53) the form of a roller configured to define, with the compaction member (553), one of the pair of shear boundaries, wherein the gripping member (53) is mounted towards one end of an L-shaped gripping member arm (53c) and an actuator (8) is mounted towards another end of the L-shaped gripping member arm (53c), such that the actuator (8) is configured to drive pivotable movement of the L-shaped gripping member arm (53c) about a corner of the L-shapes gripping member arm (53c) to control the force applied to the compaction member (553) by the gripping member (53) and optionally wherein the compressible member (552) is provided as a layer of the compaction roller.

14. A compaction shoe (51) or roller including:
a compaction member (553) at least partially defining a shear boundary of tow material (22),
a mounting member (551) configured to couple the compaction member (553) to a part of a shearing mechanism (5) or a tape laying head (1), and
a compressible member (552) located between the compaction member (553) and the mounting member (551) such that compression and decompression of the compressible member (552) permits movement of the compaction member (553) towards and away from the mounting member (551).

15. A tape laying head (1) configured to lay a tow material (22) on a mould (3) in the construction of a composite structure, the tape laying head (1) including a shearing mechanism (5) according to any of claims 1 to 13.

## Patentansprüche

1. Ein Schermechanismus (5) zur Verwendung in einem Bandlegekopf (1), der dazu ausgebildet ist, ein Faserstrangmaterial (22) bei der Herstellung einer Verbundstruktur auf eine Form (3) zu legen, wobei der Schermechanismus (5) konfiguriert ist, Faserstrangmaterial (22) von einem Faserstrangvorrat (4) aufzunehmen und das Faserstrangmaterial (22) zu lenken, indem eine Scherverformung auf das Faserstrangmaterial (22) zwischen einem Paar von durch den Schermechanismus (5) definierten Scherbegrenzungen ausgeübt wird, wobei der Schermechanismus (5) einen Verdichtungsschuh (51) umfasst, der konfiguriert ist, das Faserstrangmaterial (22) auf eine Form (3) zu pressen, wobei der Verdichtungsschuh (51) Folgendes umfasst:
Ein Verdichtungselement (553), das eine der beiden Scherbegrenzungen zumindest teilweise definiert,
ein Befestigungselement (551), das dazu ausgebildet ist, das Verdichtungselement (553) mit einem anderen Teil des Schermechanismus (5) oder dem Bandlegekopf (1) zu koppeln, wobei der Verdichtungsschuh (51) ferner Folgendes umfasst:
ein komprimierbares Element (552), das zwischen dem Verdichtungselement (553) und dem Befestigungselement (551) angeordnet ist, sodass die Kompression und Dekompression des komprimierbaren Elements (552) eine Bewegung mindestens eines Teils des Verdichtungselements (553) in Richtung und weg vom Befestigungselement (551) ermöglicht, und/oder
einen Aktuator (8), der konfiguriert ist, das Befestigungselement (551) mit dem anderen Teil des Schermechanismus (5) oder dem Bandlegekopf (1) derart zu koppeln, dass eine Betätigung des Aktuators (8) eine Bewegung zumindest eines Teils des Verdichtungselements (553) auf das Befestigungselement (551) zu und von diesem weg ermöglicht.

2. Schermechanismus (5) nach Anspruch 1, wobei sowohl das komprimierbare Element (552) als auch der Aktuator (8) als Teil des Verdichtungsschuhs (51) vorgesehen sind.

3. Schermechanismus (5) nach einem vorhergehenden Anspruch, wobei das Verdichtungselement (553) ein flexibles, längliches Element ist.

4. Schermechanismus (5) nach Anspruch 3, wobei das Verdichtungselement (553) eine Platte (553c) umfasst, die konfiguriert ist, die Form (3) zu berühren, und wobei das Verdichtungselement (553) optional einen oder mehrere Vorsprünge (553a) umfasst, die konfiguriert sind, eine Bewegung des komprimierbaren Elements (552) über eine Oberfläche des Verdichtungselements (553) hinweg zu hemmen.

5. Schermechanismus (5) nach einem vorhergehenden Anspruch, wobei das komprimierbare Element (552) eine Vielzahl von komprimierbaren Segmenten oder Teilen (552b) umfasst, und/oder wobei das komprimierbare Element (552) aus einem oder mehreren von einem geschäumten Polymer und/oder einer mit einem Gas oder einer Flüssigkeit gefüllten Blase gebildet ist.

6. Schermechanismus (5) nach einem vorhergehenden Anspruch, wobei das Verdichtungselement (551) ein flexibles Element ist.

7. Schermechanismus (5) nach Anspruch 6, wobei das Befestigungselement (551) ein längliches Element ist.

8. Schermechanismus (5) nach Anspruch 7, der ferner eine Vielzahl von Aktuatoren (8) umfasst, die konfiguriert sind, das Befestigungselement (551) mit dem anderen Teil des Bandlegekopfes (1) zu koppeln, wobei die Aktuatoren (8) entlang einer Länge des länglichen Befestigungselements (551) verteilt sind.

9. Schermechanismus (5) nach Anspruch 8, wobei jeder Aktuator (8) über ein Gabelgelenk mit dem Befestigungselement (551) gekoppelt ist.

10. Schermechanismus (5) nach einem der Ansprüche 1 bis 5, wobei das Befestigungselement (551) ein starres Element ist.

11. Schermechanismus (5) nach Anspruch 10, wobei das Befestigungselement (551) einen Hohlkörper aufweist, der dazu ausgebildet ist, das komprimierbare Element (552) zumindest teilweise aufzunehmen.

12. Schermechanismus (5) nach Anspruch 10 oder 11, wobei das komprimierbare Element (552) eine Vielzahl von komprimierbaren Teilen oder Segmenten (552b) umfasst, wobei jedes Teil oder Segment (552b) an einen Block gekoppelt ist, um das komprimierbare Teil oder Segment (552b) am Befestigungselement (551) zu sichern.

13. Schermechanismus (5) nach Anspruch 1:
(i) wobei das Verdichtungselement (553) die Form einer Verdichtungswalze aufweist, die konfiguriert ist, sich relativ zum Befestigungselement (551) zu drehen; oder
(ii) wobei das Verdichtungselement (553) die Form einer Verdichtungswalze aufweist, die konfiguriert ist, sich relativ zu dem Befestigungselement (551) zu drehen, und wobei das komprimierbare Element (552) als eine Schicht der Verdichtungswalze bereitgestellt ist; oder
(iii) wobei das Verdichtungselement (553) die Form einer Verdichtungswalze aufweist, die konfiguriert ist, sich relativ zu dem Befestigungselement (551) und dem Schermechanismus zu drehen, und wobei der Schermechanismus ferner ein Greifelement (53) in Form einer Walze umfasst, die konfiguriert ist, gemeinsam mit dem Verdichtungselement (553) eine der beiden Schergrenzen zu definieren, und wobei das komprimierbare Element (552) optional als eine Schicht der Verdichtungswalze bereitgestellt ist, oder
(iv) wobei das Verdichtungselement (553) die Form einer als Verdichtungswalze aufweist, die konfiguriert ist, sich relativ zum Befestigungselement und dem Schermechanismus zu drehen, und wobei der Schermechanismus (5) ferner ein Greifelement (53) in Form einer Walze umfasst, die konfiguriert ist, gemeinsam mit dem Verdichtungselement (553) eine der beiden Schergrenzen zu definieren, wobei das Greifelement (53) in Richtung eines Endes eines L-förmigen Greifelementarms (53c) angebracht ist und ein Aktuator (8) in Richtung eines nahe anderen Endes des L-förmigen Greifelementarms (53c) derart angebracht ist, dass der Aktuator (8) konfiguriert ist, eine Schwenkbewegung des L-förmigen Greifelementarms (53c) um eine Ecke des L-förmigen Greifelementarms (53c) anzutreiben, um die von dem Greifelement (53) auf das Verdichtungselement (553) ausgeübte Kraft zu steuern, und wobei das komprimierbare Element (552) optional als eine Schicht der Verdichtungswalze bereitgestellt ist.

14. Verdichtungsschuh (51) oder -walze, umfassend:
Ein Verdichtungselement (553), das zumindest teilweise eine Scherbegrenzung des Faserstrangmaterials (22) definiert,
ein Befestigungselement (551), das konfiguriert ist, das Verdichtungselement (553) mit einem Teil eines Schermechanismus (5) oder einem Bandablagekopf (1) zu verbinden, und
ein komprimierbares Element (552), das zwischen dem Verdichtungselement (553) und dem Befestigungselement (551) angeordnet ist, sodass die Kompression und Dekompression des komprimierbaren Elements (552) eine Bewegung des Verdichtungselements (553) in Richtung und weg vom Befestigungselement (551) ermöglicht.

15. Bandlegekopf (1), der konfiguriert ist, ein Faserstrangmaterial (22) bei der Herstellung einer Verbundstruktur auf eine Form (3) zu legen, wobei der Bandlegekopf (1) einen Schermechanismus (5) nach einem der Ansprüche 1 bis 13 umfasst.

## Revendications

1. Mécanisme de cisaillement (5) destiné à être utilisé dans une tête de pose de bande (1) configurée pour poser un matériau d'étoupe (22) sur un moule (3) dans la construction d'une structure composite, le mécanisme de cisaillement (5) étant configuré pour recevoir un matériau d'étoupe (22) en provenance d'un dispositif d'alimentation en étoupe (4) et pour cisailler le matériau d'étoupe (22) en effectuant une déformation par cisaillement du matériau d'étoupe (22) entre deux limites de cisaillement que définit le mécanisme de cisaillement (5), le mécanisme de cisaillement (5) comprenant un sabot de compactage (51) configuré pour presser le matériau d'étoupe (22) contre un moule (3), dans lequel le sabot de compactage (51) comporte :
un élément de compactage (553) définissant au moins partiellement l'une des deux limites de cisaillement,
un élément de montage (551) configuré pour coupler l'élément de compactage (553) à une autre partie du mécanisme de cisaillement (5) ou de la tête de pose de bande (1), et dans lequel le sabot de compactage (51) comporte en outre :
un élément compressible (552) situé entre l'élément de compactage (553) et l'élément de montage (551), de sorte que la compression et la décompression de l'élément compressible (552) permettent le mouvement d'au moins une partie de l'élément de compactage (553) en direction et à distance de l'élément de montage (551), et/ou
un actionneur (8) configuré pour coupler l'élément de montage (551) à l'autre partie du mécanisme de cisaillement (5) ou de la tête de pose de bande (1), de sorte que l'activation de l'actionneur (8) permet le mouvement d'au moins une partie de l'élément de compactage (553) dans la direction et à distance de l'élément de montage (551).

2. Mécanisme de cisaillement (5) selon la revendication 1, dans lequel à la fois l'élément compressible (552) et l'actionneur (8) font partie intégrante du sabot de compactage (51).

3. Mécanisme de cisaillement (5) selon l'une quelconque des revendications précédentes, dans lequel l'élément de compactage (553) est un élément allongé souple.

4. Mécanisme de cisaillement (5) selon la revendication 3, dans lequel l'élément de compactage (553) comprend une plaque (553c) configurée pour entrer en contact avec le moule (3) et, facultativement, dans lequel l'élément de compactage (553) comporte un ou plusieurs éléments saillants (553a) configurés pour bloquer tout mouvement de l'élément compressible (552) en travers d'une surface de l'élément de compactage (553).

5. Mécanisme de cisaillement (5) selon l'une quelconque des revendications précédentes, dans lequel l'élément compressible (552) comprend une pluralité de segments ou de parties compressibles (552b) ; et/ou dans lequel l'élément compressible (552) est constitué d'au moins un polymère expansé et d'une vessie remplie de gaz ou de liquide.

6. Mécanisme de cisaillement (5) selon l'une quelconque des revendications précédentes, dans lequel l'élément de montage (551) est un élément souple.

7. Mécanisme de cisaillement (5) selon la revendication 6, dans lequel l'élément de montage (551) est un élément allongé.

8. Mécanisme de cisaillement (5) selon la revendication 7, comprenant en outre une pluralité d'actionneurs (8) configurés pour coupler l'élément de montage (551) à l'autre partie de la tête de pose de bande (1), dans lequel les actionneurs (8) sont répartis le long d'une longueur de l'élément de montage allongé (551).

9. Mécanisme de cisaillement (5) selon la revendication 8, dans lequel chaque actionneur (8) est couplé à l'élément de montage (551) par un joint d'articulation.

10. Mécanisme de cisaillement (5) selon l'une quelconque des revendications 1 à 5, dans lequel l'élément de montage (551) est un élément rigide.

11. Mécanisme de cisaillement (5) selon la revendication 10, dans lequel l'élément de montage (551) comprend un corps creux qui est configuré pour recevoir, au moins partiellement, l'élément compressible (552).

12. Mécanisme de cisaillement (5) selon soit la revendication 10, soit la revendication 11, dans lequel l'élément compressible (552) comprend une pluralité de parties ou de segments compressibles (552b), dans lequel chaque partie ou chaque segment (552b) est couplé à un bloc pour assujettir la partie ou le segment compressible (552b) à l'élément de montage (551).

13. Mécanisme de cisaillement (5) selon la revendication 1 :
(i) dans lequel l'élément de compactage (553) se présente sous la forme d'un rouleau de compactage configuré pour tourner par rapport à l'élément de montage (551) ; ou
(ii) dans lequel l'élément de compactage (553) se présente sous la forme d'un rouleau de compactage configuré pour tourner par rapport à l'élément de montage (551) et dans lequel l'élément compressible (552) est fourni sous forme d'une couche du rouleau de compactage ; ou
(iii) dans lequel l'élément de compactage (553) se présente sous la forme d'un rouleau de compactage configuré pour tourner par rapport à l'élément de montage (551) et au mécanisme de cisaillement, et le mécanisme de cisaillement comporte en outre un élément de préhension (53) sous la forme d'un rouleau configuré pour définir, conjointement avec l'élément de compactage (553), l'une des deux limites de cisaillement et, facultativement, dans lequel l'élément compressible (552) est fourni sous forme d'une couche du rouleur de compactage ; ou
(iv) dans lequel l'élément de compactage (553) se présente sous la forme d'un rouleau de compactage configuré pour tourner par rapport à l'élément de montage et au mécanisme de cisaillement, et le mécanisme de cisaillement (5) comporte en outre un élément de préhension (53) sous la forme d'un rouleau configuré pour définir, conjointement avec l'élément de compactage (553), l'une des deux limites de cisaillement, dans lequel l'élément de préhension (53) est monté dans la direction d'une extrémité du bras de l'élément de préhension en forme de L (53c) et un actionneur (8) est monté dans la direction d'une autre extrémité du bras de l'élément de préhension (53c) de sorte que l'actionneur (8) est configuré pour que le bras de l'élément de préhension en forme de L (53c) exécute un mouvement pivotant de part et d'autre d'un angle du bras de l'élément de préhension en forme de L (53c) afin de contrôler la force appliquée sur l'élément de compactage (553) par l'élément de préhension (53) et, facultativement, dans lequel l'élément compressible est fourni sous forme d'une couche du rouleau de compactage.

14. Sabot de compactage (51) ou rouleau comprenant :
un élément de compactage (553), au moins partiellement, définissant une limite de cisaillement de matériau d'étoupe (22),
un élément de montage (551) configuré pour coupler l'élément de compactage (553) à une partie du mécanisme de cisaillement (5) ou à une tête de pose de bande (1), et
un élément compressible (552) situé entre l'élément de compactage (553) et l'élément de montage (551), de sorte que la compression et la décompression de l'élément compressible (553) permettent le mouvement de l'élément de compactage (553) dans la direction et à distance de l'élément de montage (551).

15. Tête de pose de bande (1) configurée pour poser un matériau d'étoupe (3) sur un moule (3) dans la construction d'une structure composite, la tête de pose de bande (1) comportant un mécanisme de cisaillement (5) selon l'une quelconque des revendications 1 à 13.
